# EUROPEAN PATENT SPECIFICATION

(11) **EP 2 982 588 B1**
(45) Date of publication and mention of the grant of the patent: **18.09.2019**
(21) Application number: 15742879.8
(22) Date of filing: 30.01.2015
(51) Int. Cl.: B62K 5/05, B62J 17/06, B62J 99/00, B62K 5/027, B62K 5/08

(54) **VEHICLE**
FAHRZEUG
VÉHICULE

(30) Priority: 31.01.2014 JP 2014017276
(43) Date of publication of application: 10.02.2016
(73) Proprietor: Yamaha Hatsudoki Kabushiki Kaisha, Iwata-shi, Shizuoka 438-8501 (JP)
(72) Inventor: ASANO, Daisuke, Iwata-shi, Shizuoka n438-8501 (JP); TAKANO, Kazuhisa, Iwata-shi, Shizuoka n438-8501 (JP)
(74) Representative: Grünecker Patent- und Rechtsanwälte PartG mbB
(86) International application number: PCT/JP2015/000415
(87) International publication number: WO 2015/115111

(56) References cited:
- EP-A1- 2 368 729
- EP-A1- 2 937 270
- JP-A- H05 139 357
- JP-A- H05 139 357
- JP-A- 2008 162 358
- JP-A- 2008 162 358
- JP-A- 2011 126 514
- JP-A- 2011 126 514
- JP-A- 2014 193 679
- JP-B2- S5 929 466
- US-A- 4 351 410

## Description

The present invention relates to a vehicle according to the preamble of independent claim1. Such a vehicle can be taken from the prior art document EP 2 368 729 A1. A comparable vehicle can be taken from the prior art document US 4,351,410.

A vehicle including: a body frame that tilts in a left-right direction of the vehicle during left and right turns; and two front wheels disposed side by side in the left-right direction of the body frame is known (for example, see Patent Literature (hereinafter, referred to as "PTL") 1 and Non-Patent Literature (hereinafter, referred to as "NPL") 1). This type of vehicle is a vehicle that can turn while the body frame tilts relative to a vertical direction. More specifically, the body frame tilts to the right of the vehicle during the right turn and to the left of the vehicle during the left turn.

The vehicle described in PTL 1 and NPL 1 includes link mechanisms. The link mechanism includes an upper cross member and a lower cross member. The link mechanism also includes: a right-side rod that supports right end portions of the upper cross member and the lower cross member; and a left-side rod that supports left end portions of the upper cross member and the lower cross member. An intermediate portion of the upper cross member and an intermediate portion of the lower cross member are supported by the body frame. The upper cross member and the lower cross member are supported by the body frame so as to be capable of turning (hereinafter, referred to as "turnable") around an axis extending substantially in the front-rear direction of the body frame. The upper cross member and the lower cross member turn relative to the body frame in conjunction with tilting of the body frame that is tilting, and the relative position of the left front wheel and the right front wheel in the up-down direction of the body frame changes. The upper cross member and the lower cross member are disposed above the left front wheel and the right front wheel in the up-down direction of the body frame, when the body frame is in an upright state.

### Citation List

### Patent Literature

PTL 1
U.S. Design Patent No. D547,242S

### Non-Patent Literature

NPL 1
Catalogo parti di ricambio, MP3 300 ie LT Mod. ZAPM64102, Piaggio & C. SpA, pp. 54, 81, 111

In the vehicle described in PTL 1 and NPL 1, the upper cross member and the lower cross member of the link mechanism are provided above the left front wheel and the right front wheel in the up-down direction of the body frame when the body frame is in the upright state. Therefore, the vehicle is compact in the left-right direction of the body frame.

The vehicle described in PTL 1 and NPL 1 includes an engine unit including an engine and a radiator that radiates heat generated by combustion of the engine. In the vehicle described in PTL 1, a ventilation opening is formed in a front surface of a front cover that covers the front of the link mechanism. The radiator is disposed inside of the front cover. The vehicle disclosed in PTL 1 takes in, from the ventilation opening of the front cover, the air flowing from the front to the rear of the vehicle during the running and guides the air to the radiator. In this way, the engine unit is cooled. When the vehicle includes a body frame capable of tilting (hereinafter, referred to as "tiltable") and two front wheels disposed side by side in the left-right direction of the body frame, the front cover is likely to become large in size for housing the link mechanism that links the two front wheels. Disposing the radiator in the front cover while avoiding the interference with the link mechanism causes the front cover to increase in size, thus, causing the vehicle to increase in size.

An object of the present invention is to provide a vehicle including: a body frame that tilts in the left-right direction of the vehicle during left and right turns; and two front wheels disposed side by side in the left-right direction of the body frame, in which a power unit can be efficiently cooled, and a front part of the vehicle can be downsized.

According to the present invention said object is solved by a vehicle having the features of independent claim 1. Preferred embodiments are laid down in the dependent claims.

The vehicle according to an aspect of the present invention (hereinafter, also referred to as "first aspect of the vehicle") is a vehicle including: a body frame; a right front wheel and a left front wheel disposed side by side in a left-right direction of the body frame; a right-front-wheel support unit including an upper portion and a lower portion that supports the right front wheel; a left-front-wheel support unit including an upper portion and a lower portion that supports the left front wheel; a link mechanism including a right-side rod that supports the upper portion of the right-front-wheel support unit in a manner that makes the upper portion thereof turnable around a right axis extending in an up-down direction of the body frame, a left-side rod that supports the upper portion of the left-front-wheel support unit in a manner that makes the upper portion thereof turnable around a left axis which is parallel to the right axis, an upper cross member including a right end portion that supports an upper part of the right-side rod in a manner that makes the upper part thereof turnable, a left end portion that supports an upper part of the left-side rod in a manner that makes the upper part thereof turnable, and an intermediate portion that is supported by the body frame so as to be turnable around an upper axis extending in a front-rear direction of the body frame, and a lower cross member including a right end portion that supports a lower part of the right-side rod in a manner that makes the lower part thereof turnable, a left end portion that supports a lower part of the left-side rod in a manner that makes the lower part thereof turnable, and an intermediate portion that is supported by the body frame so as to be turnable around a lower axis which is parallel to the upper axis, a rear wheel; and a power unit that generates driving force of the rear wheel, in which the power unit is cooled by air that has passed through a range below a lower end of the lower cross member of the link mechanism in the up-down direction of the body frame, on the left of the right front wheel in the left-right direction of the body frame, and on the right of the left front wheel in the left-right direction of the body frame in a front view and behind front ends of the right front wheel and the left front wheel in the front-rear direction of the body frame in a side view, with the body frame in an upright state.

The link mechanism includes: the right side rod; the left side rod; the upper cross member including the right end portion that supports the upper part of the right side rod in a manner that makes the upper part turnable, the left end portion that supports the upper part of the left side rod in a manner that makes the upper part turnable, and the intermediate portion that is supported by the body frame in a manner that makes the intermediate portion turnable around the upper axis extending in the front-rear direction of the body frame; and the lower cross member including the right end portion that supports the lower part of the right side rod in a manner that makes the lower part turnable, the left end portion that supports the lower part of the left side rod in a manner that makes the lower part turnable, and the intermediate portion that is supported by the body frame in a manner that makes the intermediate portion turnable around the lower axis parallel to the upper axis. The right side rod supports the upper part of the right front wheel support unit including the upper part and the lower part that supports the right front wheel, in a manner that makes the upper part turnable around the right axis extending in the up-down direction of the body frame. The left side rod supports the upper part of the left front wheel support unit including the upper part and the lower part that supports the left front wheel, in a manner that makes the upper part turnable around the left axis parallel to the right axis. Therefore, the upper cross member and the lower cross member of the link mechanism are provided above the left front wheel and the right front wheel in the up-down direction of the body frame, with the body frame in the upright state. Thus, the vehicle of the first aspect is compact in the left-right direction of the body frame.

The present inventor has investigated the arrangement of the link mechanism to determine whether the power unit can be efficiently cooled while suppressing an increase in size of a compact vehicle.

The present inventor has recognized that because the upper cross member and the lower cross member of the link mechanism are provided above the left front wheel and the right front wheel in the up-down direction of the body frame with the body frame in the upright state, there is a space in a range below the lower end of the lower cross member of the link mechanism, on the left of the right front wheel, and on the right of the left front wheel in a front view and behind the front ends of the right front wheel and the left front wheel in a side view, with the body frame in the upright state. Therefore, the present inventor has focused on the formation of a flow of air from the front toward the rear in this space while the vehicle runs. As a result, the power unit is cooled by the air that has passed through the range below the lower end of the lower cross member of the link mechanism, on the left of the right front wheel, and on the right of the left front wheel in a front view and behind the front ends of the right front wheel and the left front wheel in a side view, with the body frame in the upright state. This can efficiently cool the power unit and downsize the front part of the vehicle.
Therefore, according to the first aspect, the power unit can be efficiently cooled, and the front part of the vehicle can be downsized in the vehicle including the tiltable body frame, the left front wheel, and the right front wheel.
A vehicle according to a second aspect, which is an aspect according to the present invention, is the vehicle according to the first aspect further including: a heat exchanger that releases heat; and a pipe that transmits a fluid cooled by the heat exchanger to the power unit, in which the power unit is disposed behind a rear end of the lower cross member of the link mechanism in the front-rear direction of the body frame in a plan view with the body frame in the upright state, and at least part of the heat exchanger is disposed behind the rear end of the lower cross member of the link mechanism in the front-rear direction of the body frame in a plan view with the body frame in the upright state. The power unit and the heat exchanger are connected by a pipe that transmits the fluid cooled by the heat exchanger to the power unit. Therefore, when the heat exchanger is disposed forward of the link mechanism, the air can be guided to the heat exchanger without obstruction by the link mechanism, and the heat can be efficiently released by the heat exchanger. However, the pipe connecting the power unit and the heat exchanger is routed to the power unit to avoid the movable range of the link mechanism supported by the body frame in a manner that makes the link mechanism turnable. Therefore, the front part of the vehicle further increases in size. However, according to the vehicle of the second aspect, the power unit is disposed behind the rear end of the lower cross member of
the link mechanism in a plan view with the body frame in the upright state. At least part of the heat exchanger is disposed behind the rear end of the lower cross member of the link mechanism in a plan view with the body frame in the upright state. Therefore, the pipe that transmits, to the power unit, the fluid cooled by the heat exchanger while efficiently cooling the heat exchanger by the air that has passed through the range below the lower end of the lower cross member of the link mechanism, on the left of the right front wheel, and on the right of the left front wheel in a front view and behind the front ends of the right front wheel and the left front wheel in a side view with the body frame in the upright state does not have to pass near the link mechanism that can move relative to the body frame. Thus, the front part of the vehicle can be downsized even if the heat exchanger that releases the heat is disposed.

Therefore, according to the second aspect, the power unit can be efficiently cooled, and the front part of the vehicle can be downsized in the vehicle including the tiltable body frame, the left front wheel, and the right front wheel.

A vehicle according to a third aspect is the vehicle according to the second aspect in which, at least part of the heat exchanger is disposed below the lower end of the lower cross member of the link mechanism in the up-down direction of the body frame and between the right front wheel and the left front wheel in a front view with the body frame in the upright state, and the heat exchanger is disposed so that an area of a front surface of the heat exchanger as viewed in the front-rear direction of the body frame is greater than an area of the front surface as viewed in the left-right direction of the body frame and greater than an area of the front surface as viewed in the up-down direction of the body frame, and the heat exchanger releases the heat by allowing the air to pass through the heat exchanger from the front surface toward a rear surface of the heat exchanger.

According to the vehicle of the third aspect, at least part of the heat exchanger is disposed below the lower end of the lower cross member of the link mechanism in the up-down direction of the body frame and between the right front wheel and the left front wheel in a front view with the body frame in the upright state, the heat exchanger is disposed so that the area of the front surface as viewed in the front-rear direction of the body frame is greater than the area of the front surface as viewed in the left-right direction of the body frame and greater than the area of the front surface as viewed in the up-down direction of the body frame, and the heat exchanger allows the air to pass therethrough from the front surface toward the rear surface to release the heat. Therefore, the front part of the vehicle can be downsized even when the heat exchanger is disposed on the vehicle. Furthermore, the air that has passed from the front to the rear in the front-rear direction of the body frame between the right front wheel and the left front wheel while the vehicle runs can be guided to the heat exchanger. Therefore, high cooling efficiency of the heat exchanger can be obtained. As a result, the power unit can be efficiently cooled, and the front part of the vehicle can be downsized in the vehicle including the tiltable body frame, the left front wheel, and the right front wheel.

A vehicle according to a fourth aspect is the vehicle according to the second aspect further including an air intake port of a passage that guides the air to the heat exchanger, in which at least part of the air intake port is positioned in a range behind the rear end of the lower cross member of the link mechanism in the front-rear direction of the body frame in a plan view with the body frame in the upright state and below the lower end of the lower cross member of the link mechanism in the up-down direction of the body frame, on the left of the right front wheel in the left-right direction of the body frame, and on the right of the left front wheel in the left-right direction of the body frame in a front view with the body frame in the upright state, and in the front-rear direction of the body frame, the heat exchanger is disposed behind the air intake port in the front-rear direction of the body frame.

According to the vehicle of the fourth aspect, the front part of the vehicle can be downsized by the disposition of the air intake port and by the heat exchanger disposed behind the air intake port. Furthermore, the air that has passed between the right front wheel and the left front wheel while the vehicle runs can be guided to the heat exchanger through the air intake port positioned in the range behind the rear end of the lower cross member of the link mechanism in the front-rear direction of the body frame in a plan view with the body frame in the upright state and below the lower end of the lower cross member of the link mechanism in the up-down direction of the body frame, on the left of the right front wheel in the left-right direction of the body frame, and on the right of the left front wheel in the left-right direction of the body frame in a front view with the body frame in the upright state. Therefore, high cooling efficiency of the heat exchanger can be obtained. As a result, the power unit can be efficiently cooled, and the front part of the vehicle can be downsized in the vehicle including the tiltable body frame, the left front wheel, and the right front wheel.

A vehicle according to a fifth aspect is the vehicle according to any one of the second to the fourth aspects of the present invention further including a front cover that covers a front of at least part of the link mechanism in the front-rear direction of the body frame in a front view with the body frame in the upright state, in which at least part of a lower edge of the front cover that is positioned forward of the link mechanism in the front-rear direction of the body frame is positioned above a lower end of the link mechanism in the up-down direction of the body frame, in which at least part of the heat exchanger is disposed below the lower edge of the front cover in the up-down direction of the body frame in a front view with the body frame in the upright state.

According to the vehicle of the fifth aspect, at least part of the lower edge of the front cover positioned forward of the link mechanism in the front-rear direction of the body frame is positioned above the lower end of the link mechanism in the up-down direction of the body frame. Therefore, the front part of the vehicle can be downsized. Furthermore, at least part of the heat exchanger is disposed below the lower edge of the front cover in the up-down direction of the body frame in a front view with the body frame in the upright state. Therefore, the air that has passed below the compact front cover and between the right front wheel and the left front wheel while the vehicle runs in a front view with the body frame in the upright state can be guided to the heat exchanger. Thus, high cooling efficiency of the heat exchanger can be obtained. Therefore, the power unit can be efficiently cooled, and the front part of the vehicle can be downsized in the vehicle including the tiltable body frame, the left front wheel, and the right front wheel.

A vehicle according to a sixth aspect is the vehicle according to any one of the second to the fifth aspects, in which at least part of the heat exchanger is disposed below upper ends of the right front wheel and the left front wheel in the up-down direction of the body frame in a front view with the body frame in the upright state.

While the vehicle runs, a flow of air is generated from the front to the rear in the front-rear direction of the body frame, in the range below the lower end of the lower cross member of the link mechanism in the up-down direction of the body frame, on the left of the right front wheel in the left-right direction of the body frame, and on the right of the left front wheel in the left-right direction of the body frame in a front view and behind the front ends of the right front wheel and the left front wheel in the front-rear direction of the body frame in a side view, with the body frame in the upright state. Furthermore, the air flows from the front to the rear in the front-rear direction of the body frame, between the bottom surface of the vehicle and the ground. Therefore, a flow of air with a high flow velocity is generated between the bottom surface of the vehicle and the ground. Thus, the flow of the air with a high flow velocity generated below the vehicle generates negative pressure below the vehicle. In the vehicle of the sixth aspect, at least part of the heat exchanger is disposed below the upper ends of the right front wheel and the left front wheel in the up-down direction of the body frame in a front view with the body frame in the upright state. Since the heat exchanger is disposed at a low position close to the bottom surface of the vehicle, the flow of the air passing through the heat exchanger can be more easily formed. Therefore, high cooling efficiency of the heat exchanger can be obtained. Thus, the power unit can be efficiently cooled, and the front part of the vehicle can be downsized in the vehicle including the tiltable body frame, the left front wheel, and the right front wheel.

A vehicle according to a seventh aspect is the vehicle according to any one of the second to the sixth aspects, in which at least part of the heat exchanger is disposed above the upper ends of the right front wheel and the left front wheel in the up-down direction of the body frame in a front view with the body frame in the upright state.

When the vehicle runs on a puddle, for example, water, mud, or the like splashed by the front wheels hits the region between the right front wheel and the left front wheel. According to the vehicle of the seventh aspect, at least part of the heat exchanger is disposed above the upper ends of the right front wheel and the left front wheel in the up-down direction of the body frame, and the influence of the splashed water and mud can be reduced. Therefore, the power unit can be efficiently cooled, and the front part of the vehicle can be downsized in the vehicle including the tiltable body frame, the left front wheel, and the right front wheel.

A vehicle according to an eighth aspect is the vehicle according to any one of the second to the seventh aspects, in which the body frame includes an inclination portion positioned behind the link mechanism in the front-rear direction of the body frame and forward of a seating surface on which a rider sits in the front-rear direction of the body frame with the body frame in the upright state, the inclination portion being inclined so that a rear part of the inclination portion is positioned below a front part thereof in the up-down direction of the body frame, and the heat exchanger is disposed forward of the inclination portion of the body frame in the front-rear direction of the body frame.
According to the vehicle of the eighth aspect, the disposition of the heat exchanger that can obtain high cooling efficiency can be realized with the heat exchanger interfering with the body frame. Therefore, the power unit can be efficiently cooled, and the front part of the vehicle can be downsized in the vehicle including the tiltable body frame, the left front wheel, and the right front wheel.
A vehicle according to a ninth aspect, which is an aspect according to the present invention, is the vehicle according to any one of the second to the eighth aspects, in which in the front-rear direction of the body frame, the heat exchanger is disposed forward of the power unit in the front-rear direction of the body frame.
According to the vehicle of the ninth aspect, the air that has passed between the right front wheel and the left front wheel while the vehicle runs can be guided to the heat exchanger without obstruction by the power unit. Therefore, high cooling efficiency of the heat exchanger can be surely obtained. Thus, the power unit can be efficiently cooled, and the front part of the vehicle can be downsized in the vehicle including the tiltable body frame, the left front wheel, and the right front wheel.
A vehicle according to a tenth aspect is the vehicle according to any one of the second to the ninth aspects, in which the heat exchanger is a radiator, an oil cooler, or an intercooler. According to the vehicle of the tenth aspect, high cooling efficiency of the radiator, the oil cooler, or the intercooler can be obtained while downsizing the front part of the vehicle. Therefore, the power unit can be efficiently cooled, and the front part of the vehicle can be downsized in the vehicle including the tiltable body frame, the left front wheel, and the right front wheel.
A vehicle according to an eleventh aspect is the vehicle according to the first aspect, in which the power unit includes an engine, and the engine is disposed so as to receive air passing through a range below the lower end of the lower cross member of the
link mechanism in the up-down direction of the body frame, on the left of the right front wheel in the left-right direction of the body frame, and on the right of the left front wheel in the left-right direction of the body frame in a front view and behind the front ends of the right front wheel and the left front wheel in the front-rear direction of the body frame in a side view, with the body frame in the upright state.

According to the vehicle of the eleventh aspect, the air that has passed between the right front wheel and the left front wheel can be applied to the engine. Therefore, the engine can be efficiently cooled, and the front part of the vehicle can be downsized in the vehicle including the tiltable body frame, the left front wheel, and the right front wheel.

A vehicle according to a twelfth aspect is the vehicle according to the eleventh aspect, in which the power unit is disposed below the lower end of the lower cross member of the link mechanism in the up-down direction of the body frame, on the left of the right front wheel in the left-right direction of the body frame, and on the right of the left front wheel in the left-right direction of the body frame in a front view with the body frame in the upright state, and the power unit is disposed behind the rear end of the lower cross member of the link mechanism in the front-rear direction of the body frame and forward of a front end of the rear wheel in the front-rear direction of the body frame in a side view with the body frame in the upright state.

According to the vehicle of the twelfth aspect, the air that has passed between the right front wheel and the left front wheel can be applied to the power unit. Therefore, the power unit can be efficiently cooled, and the front part of the vehicle can be downsized in the vehicle including the tiltable body frame, the left front wheel, and the right front wheel.

### Advantageous Effects of Invention

The present invention can provide a vehicle including an tiltable body frame, a left front wheel, and a right front wheel, in which a power unit can be efficiently cooled, and a front part of the vehicle can be downsized.

### Brief Description of Drawings

FIG. 1 is a perspective view showing a vehicle of Embodiment 1 of the present invention;
FIG. 2 is a front view showing a front part of the vehicle of Embodiment 1;
FIG. 3 is a plan view showing a configuration in which a handlebar is removed from the vehicle of Embodiment 1;
FIG. 4 is a side view showing the front part of the vehicle;
FIG. 5 is a cross-sectional view of line A-A of FIG. 4 showing a configuration of a leg shield;
FIG. 6 is a cross-sectional view of line B-B of FIG. 5 showing a configuration of the leg shield;
FIG. 7 is a front view showing a state of a link mechanism and the surroundings of the link mechanism when the vehicle tilts;
FIG. 8 is a plan view showing a state of the link mechanism and the surroundings of the link mechanism when the direction of the handlebar is changed;
FIG. 9 is a front view showing Variation 1 of disposition of radiators;
FIG. 10 is a front view showing Variation 2 of the disposition of the radiators;
FIG. 11 is a front view showing a disposition of a radiator in a vehicle of Embodiment 2 of the present invention;
FIG. 12 is a plan view showing a configuration in which an exterior and the handlebar are removed from the vehicle of Embodiment 2;
FIG. 13 is a side view showing a disposition relationship between a body frame and the radiator in the vehicle of Embodiment 2;
FIG. 14 is a front view showing a disposition of a radiator in a vehicle of Embodiment 3 of the present invention;
FIG. 15 is a plan view showing a configuration in which the exterior and the handlebar are removed from the vehicle of Embodiment 3; and
FIG. 16 is a side view showing a disposition relationship between a body frame and a radiator in the vehicle of Embodiment 3.

### Description of Embodiments

Embodiments of the present invention will be described in detail with reference to the accompanying drawings.

### <Definition of Directions>

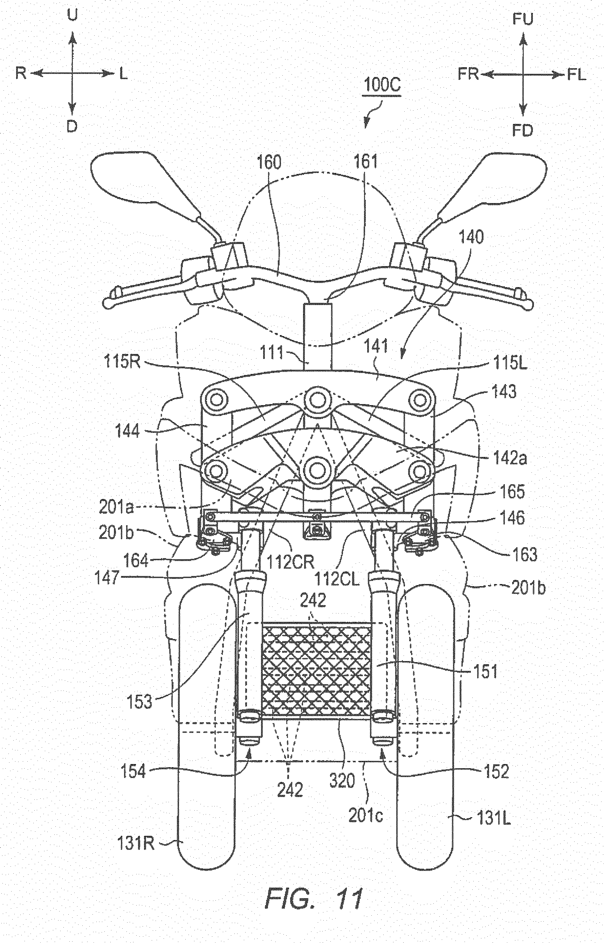

In the accompanying drawings, arrow F denotes a front direction of vehicle 100, and arrow B denotes a rear (or back) direction of vehicle 100. Arrow U denotes an upward direction of vehicle 100, and arrow D denotes a downward direction of vehicle 100. Arrow R denotes a right direction of vehicle 100, and arrow L denotes a left direction of vehicle 100. Body frame 110 tilts in a left-right direction of vehicle 100 relative to a vertical line to turn vehicle 100. Therefore, in addition to the directions of vehicle 100, directions based on body frame 110 are defined. Arrow FF in the accompanying drawings denotes a front direction based on body frame 110, and arrow FB denotes a rear direction based on body frame 110. Arrow FU denotes an upward direction based on body frame 110, and arrow FD denotes a downward direction based on body frame 110. Arrow FR denotes a right direction based on body frame 110, and arrow FL denotes a left direction based on body frame 110. In the description, a front-rear direction of vehicle 100, an up-down direction of vehicle 100, and the left-right direction of vehicle 100 denote front-rear, up-down, and left-right directions as viewed from a rider driving vehicle 100 and are directions based on vehicle 100. In this description, a front-rear direction of body frame 110, an up-down direction of body frame 110, and a left-right direction of body frame 110 are front-rear, up-down, and left-right directions as viewed from the rider driving vehicle 100 and are directions based on body frame 110. A center in a vehicle width direction denotes a center of the vehicle width in the left-right direction of vehicle 100. In other words, the center in the vehicle width direction denotes a center in the left-right direction of vehicle 100. In this description, an upright state denotes a state in which the up-down direction of body frame 110 coincides with the vertical line, and handlebar 160 is not steered. The state in which handlebar 160 is not steered denotes a state in which rotation axes of left front wheel 131L and right front wheel 131R are orthogonal to the front-rear direction of body frame 110 in a plan view. In other words, the state in which handlebar 160 is not steered is a state in which steering shaft 161 is not turned or a state in which handlebar 160 is not turned as shown in FIG. 11. In the upright state, the direction of vehicle 100 coincides with the direction of body frame 110. When body frame 110 tilts in the left-right direction relative to the vertical direction to turn vehicle 100, the left-right direction of vehicle 100 does not coincide with the left-right direction of body frame 110. The up-down direction of vehicle 100 does not coincide with the up-down direction of body frame 110, either. However, the front-rear direction of vehicle 100 coincides with the front-rear direction of body frame 110.

In the present description, an axis extending in the front-rear direction denotes not only an axis parallel to the front-rear direction of body frame 110, but also includes an axis tilted in a range of ±45° relative to the front-rear direction of body frame 110. An axis extending in a direction closer to the front-rear direction than to the left-right direction and the up-down direction is included in the axis extending in the front-rear direction. Similarly, an axis extending in the up-down direction includes an axis tilted in a range of ±45° relative to the up-down direction of body frame 110. An axis extending in a direction closer to the up-down direction than to the front-rear direction and the left-right direction is included in the axis extending in the up-down direction. An axis extending in the left-right direction includes an axis tilted in a range of ±45° relative to the left-right direction of body frame 110. An axis extending in a direction closer to the left-right direction than to the front-rear direction and the up-down direction is included in the axis extending in the left-right direction.

In this description, the expression "extends in the front-rear direction of the body frame" covers extension in an oblique front-rear direction tilting in the up, down, left or right direction, and is used as long as the extending direction includes a component in the front-rear direction of the body frame.

### <Embodiment 1>

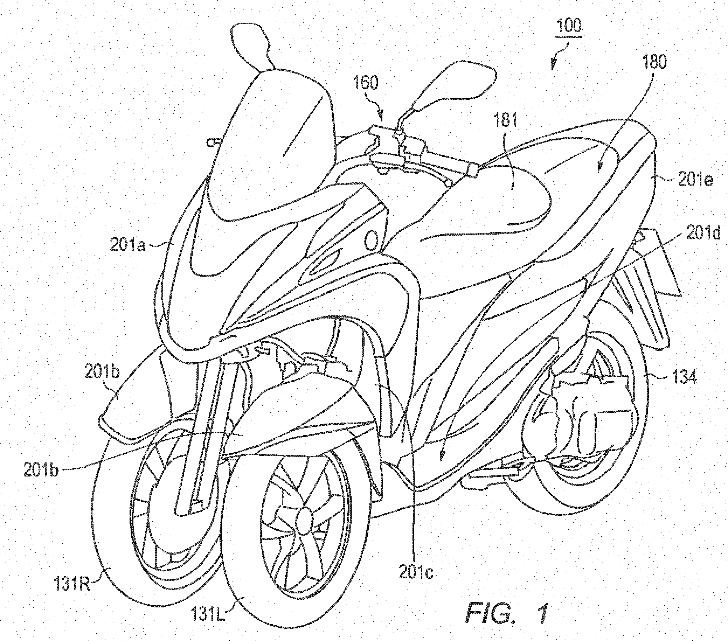

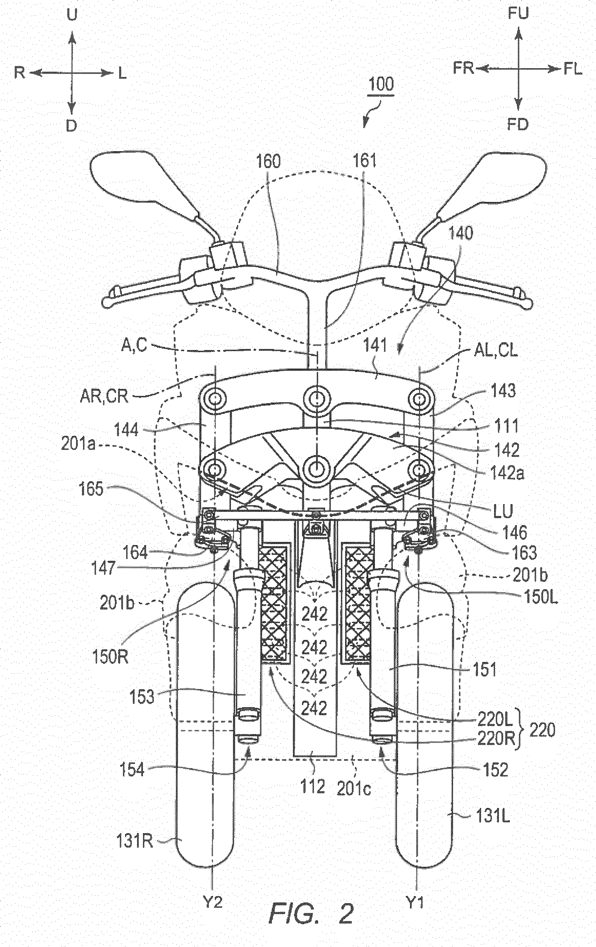

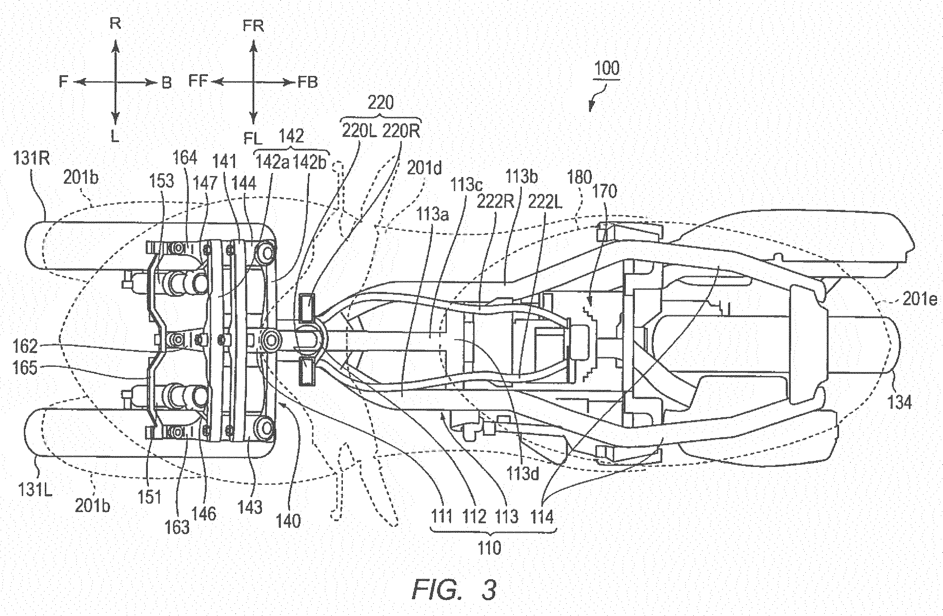

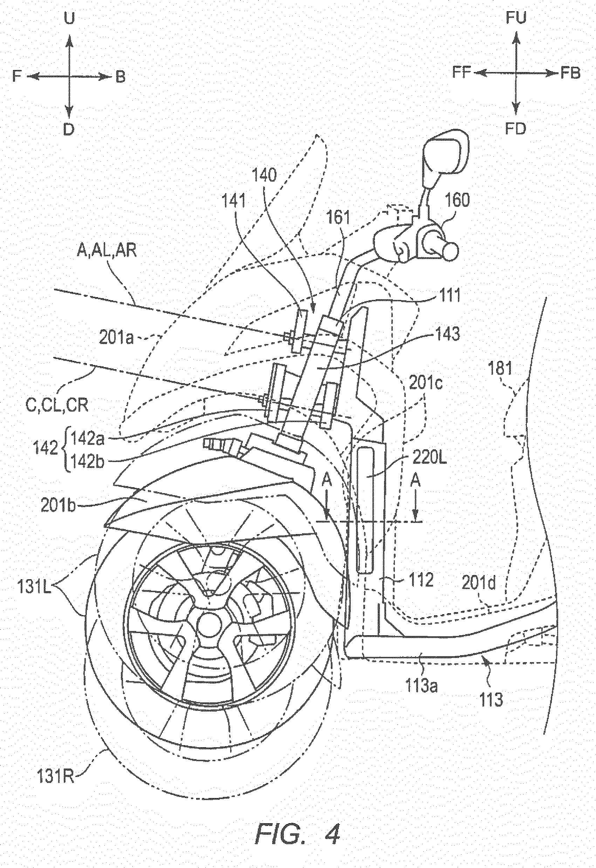

FIG. 1 is a perspective view showing a vehicle of Embodiment 1 of the present invention. FIG. 2 is a front view showing a front part of the vehicle of Embodiment 1. FIG. 3 is a plan view showing a configuration in which a handlebar is removed from the vehicle of Embodiment 1. FIG. 4 is a side view showing a front part of the vehicle. In FIGS. 2 to 4, body covers (201a, 201b, 201c, 201d, and 201e) and seat 180 are illustrated by broken lines. In FIG. 4, left front wheel 131L and right front wheel 131R when vehicle 100 tilts in the left-right direction are indicated by alternate long and two short dashes lines.

As shown in FIGS. 1 and 2, vehicle 100 of Embodiment 1 includes left front wheel 131L, right front wheel 131R, one rear wheel 134, link mechanism 140, handlebar 160, seat 180, and body covers (201a, 201b, 201c, 201d, and 201e). As shown in FIGS. 3 and 4, vehicle 100 further includes body frame 110, power unit 170, and radiator 220. Radiator 220 includes left radiator 220L and right radiator 220R.

Body frame 110 holds the components of vehicle 100. Body frame 110 includes link support 111, down frame 112, underframe 113, and rear frames 114 (see FIG. 3).

Link support 111 is disposed on a front part of vehicle 100. Link support 111 supports link mechanism 140. Although not particularly limited, link support 111 also serves as a head tube in this embodiment. Link support 111 also serving as a head tube is inclined relative to the vertical direction so that the upper part is positioned behind the lower part in the front-rear direction of body frame 110, in a side view of the vehicle. Link support 111 as a head tube supports handlebar 160 and steering shaft 161. Steering shaft 161 is inserted to link support 111 as a head tube so as to be turnable. Steering shaft 161 is turnable around a center axis of vehicle 100 extending in the up-down direction.

Down frame 112 extends downward in the up-down direction of body frame 110 from link support 111 and is connected to underframe 113.

Underframe 113 includes left underframe 113a, right underframe 113b, and side underframe 113d (see FIG. 3).

Underframe 113 is disposed below floor portion 201d of vehicle 100 in the up-down direction of body frame 110 and forward of seat 180 in a plan view. Underframe 113 supports floor portion 201d. Left underframe 113a is connected to left rear frame 114, and right underframe 113b is connected to right rear frame 114.

Rear frames 114 are disposed on the left and right of vehicle 100. Left rear frame 114 extends toward the rear part of vehicle 100 from the rear end of left underframe 113a. Right rear frame 114 extends toward the rear part of vehicle 100 from the rear end of right underframe 113b. Rear frames 114 support seat 180 and power unit 170. Power unit 170 may be supported by rear frames 114 through a swing arm so as to be swingable.

Power unit 170 generates driving force of rear wheel 134. Power unit 170 includes: a crankcase housing an engine and a crank shaft; and a transmission case housing a transmission. In the front-rear direction of body frame 110, power unit 170 is disposed behind left front wheel 131L, right front wheel 131R, link mechanism 140, and floor portion 201d in the front-rear direction of body frame 110.

Power unit 170 may be configured not to include the engine and the crankcase but to include a drive source, such as an electric motor, and a transmission.

The body cover includes front cover 201a, a pair of left and right front fenders 201b, leg shield 201c, floor portion 201d, and rear cover 201e.

Front cover 201a covers the front of at least part of link mechanism 140 in the front-rear direction of body frame 110. Front cover 201a is a region of the body cover excluding front fenders 201b, the region disposed forward of the front end of link mechanism 140 in the front-rear direction of body frame 110. Front cover 201a covers the front of upper cross member 141 of link mechanism 140 in the front-rear direction of body frame 110 and covers the front of at least part of lower cross member 142 of link mechanism 140 in the front-rear direction of body frame 110.

Leg shield 201c covers the rear of link mechanism 140 in the front-rear direction of body frame 110 and covers the rear of at least part of left front wheel 131L and right front wheel 131R in the front-rear direction of body frame 110. Leg shield 201c also covers down frame 112, left radiator 220L, and right radiator 220R. Leg shield 201c is connected to floor portion 201d.

Floor portion 201d includes a floor surface for the rider seated on seat 180 to put the feet on. The floor surface is disposed forward of seat 180 in the front-rear direction of body frame 110 and behind leg shield 201c in the front-rear direction of body frame 110 in a plan view and is disposed at a position lower than the upper ends of left front wheel 131L and right front wheel 131R in a side view. Although not particularly limited, the width of floor portion 201d is about the same length as the width from the left end of left front wheel 131L to the right end of right front wheel 131R.

Rear cover 201e covers the surroundings of rear frames 114.

Seat 180 includes seating surface 181 on which the rider sits.

Left front wheel 131L and right front wheel 131R are disposed side by side in the left-right direction of body frame 110. Left front wheel 131L and right front wheel 131R tilt in the left-right direction along with body frame 110.

Rear wheel 134 is supported by a swing arm that can swing relative to body frame 110. The swing arm may be supported by body frame 110. When power unit 170 is fixed to body frame 110, the swing arm may be supported by power unit 170. Furthermore, the swing arm is connected to rear frames 114 through a suspension. When the suspension extends, the swing arm swings relative to rear frames 114. Rear wheel 134 tilts in the left-right direction along with body frame 110.

### <Radiator>

Radiator 220 circulates a coolant between radiator 220 and power unit 170 through pipes 222L and 222R (see FIG. 3). Power unit 170 includes a water jacket through which the coolant passes. The coolant flows through the water jacket, thereby cooling power unit 170. Radiator 220 allows the air to pass therethrough from the front surface toward the rear surface to exchange heat between the air and the coolant. Radiator 220 supplies the coolant cooled by the air to power unit 170. Left pipe 222L is supported by, for example, down frame 112 and left underframe 113a and is linked with power unit 170.

More specifically, left radiator 220L and right radiator 220R are connected by pipe 222C (see FIG. 3) to circulate the coolant between left and right radiators 220L, 220R, and power unit 170 through pipes 222L, 222R, and 222C. Right pipe 222R is supported by, for example, down frame 112 and right underframe 113b and is linked with power unit 170. Left radiator 220L allows the air to pass therethrough from the front surface toward the rear surface to exchange heat between the air and the coolant. Right radiator 220R allows the air to pass therethrough from the front surface toward the rear surface to exchange heat between the air and the coolant.

Radiator 220 may be changed to an oil cooler that circulates the oil of power unit 170 to cool the oil by heat exchange with the air. Radiator 220 may be changed to an intercooler that cools the compressed intake air of the engine by heat exchange with the air and supplies the cooled air to power unit 170 through pipes 222L and 222R.

Radiator 220 is disposed inside of leg shield 201c. Left radiator 220L is disposed on the left of down frame 112 in the left-right direction of body frame 110, and right radiator 220R is disposed on the right of down frame 112 in the left-right direction of body frame 110.

Radiator 220 is fixed to body frame 110. Left radiator 220L and right radiator 220R are fixed to down frame 112 via brackets.

Radiator 220 is disposed so that the front surface thereof is perpendicular to the front-rear direction of body frame 110. Radiator 220 is disposed so that each front surface of left radiator 220L and right radiator 220R is perpendicular to the front-rear direction of body frame 110.

Radiator 220 can be disposed so that the area of the front surface thereof as viewed in the front-rear direction of body frame 110 is greater than the area of the front surface thereof as viewed in the left-right direction of body frame 110. Left radiator 220L can be disposed so that the area of the front surface thereof as viewed in the front-rear direction of body frame 110 is greater than the area of the front surface thereof as viewed in the up-down direction of body frame 110.

Specifically, left radiator 220L can be disposed so that the area of the front surface thereof as viewed in the front-rear direction of body frame 110 is greater than the area of the front surface thereof as viewed in the left-right direction of body frame 110. Furthermore, left radiator 220L can be disposed so that the area of the front surface thereof as viewed in the front-rear direction of body frame 110 is greater than the area of the front surface thereof as viewed in the up-down direction of body frame 110.

Right radiator 220R can be disposed so that the area of the front surface thereof as viewed in the front-rear direction of body frame 110 is greater than the area of the front surface thereof as viewed in the left-right direction of body frame 110. Furthermore, right radiator 220R can be disposed so that the area of the front surface thereof as viewed in the front-rear direction of body frame 110 is greater than the area of the front surface thereof as viewed in the up-down direction of body frame 110.

Here, the area of the front surface as viewed in the front-rear direction of body frame 110 means an area of the shadow of the front surface generated on a plane perpendicular to the front-rear direction when light parallel to the front-rear direction is applied. The area of the front surface as viewed in the left-right direction of body frame 110 means an area of the shadow of the front surface generated on a plane perpendicular to the left-right direction when light parallel to the left-right direction is applied. The area of the front surface as viewed in the up-down direction of body frame 110 denotes an area of the shadow of the front surface generated on a plane perpendicular to the up-down direction when light parallel to the up-down direction is applied. The area of the front surface means an area of the front surface when a radiator disposed in the same way as in the on-board state is viewed alone. For example, when radiator 220 is hidden under the cover, the area of the front surface means an area of the front surface of the radiator alone without the cover.

A fan that generates a negative pressure on the rear surface of radiator 220 may be attached to radiator 220. In this case, the surface side of radiator 220 where the fan is attached is the rear surface of radiator 220.

As shown in FIG. 3, at least part of radiator 220 in the front-rear direction of body frame 110 is disposed behind the rear end of lower cross member 142 of link mechanism 140 in the front-rear direction of body frame 110. Specifically, in the front-rear direction of body frame 110, left radiator 220L and right radiator 220R are disposed behind the rear end of lower cross member 142 of link mechanism 140 in the front-rear direction of body frame 110. In Embodiment 1, the rear end of lower cross member 142 is the rear end of rear lower cross member 142b.

As shown in FIG. 2, at least part of radiator 220 is disposed below the lower end of lower cross member 142 of link mechanism 140 in the up-down direction of body frame 110 and between left front wheel 131L and right front wheel 131R, in a front view with body frame 110 in the upright state. Specifically, part of left radiator 220L is disposed below the lower end of lower cross member 142 of link mechanism 140 in the up-down direction of body frame 110 and between left front wheel 131L and right front wheel 131R. Part of right radiator 220R is disposed below the lower end of lower cross member 142 of link mechanism 140 in the up-down direction of body frame 110 and between left front wheel 131L and right front wheel 131R. The upright state of body frame 110 is a state in which left front wheel 131L and right front wheel 131R are not turned. The state in which left front wheel 131L and right front wheel 131R are not turned denotes a state in which left front wheel 131L and right front wheel 131R facing in a direction parallel to the front-rear direction of body frame 110 in a plan view.

Furthermore, at least part of radiator 220 is disposed below the lower edge (indicated by a thick broken line in FIG. 2) of front cover 201a in the up-down direction of body frame 110 in a front view of body frame 110. Specifically, a lower part of left radiator 220L and a lower part of right radiator 220R are disposed below the lower edge (indicated by a thick broken line in FIG. 2) of front cover 201a in the up-down direction of body frame 110 in a front view of body frame 110.

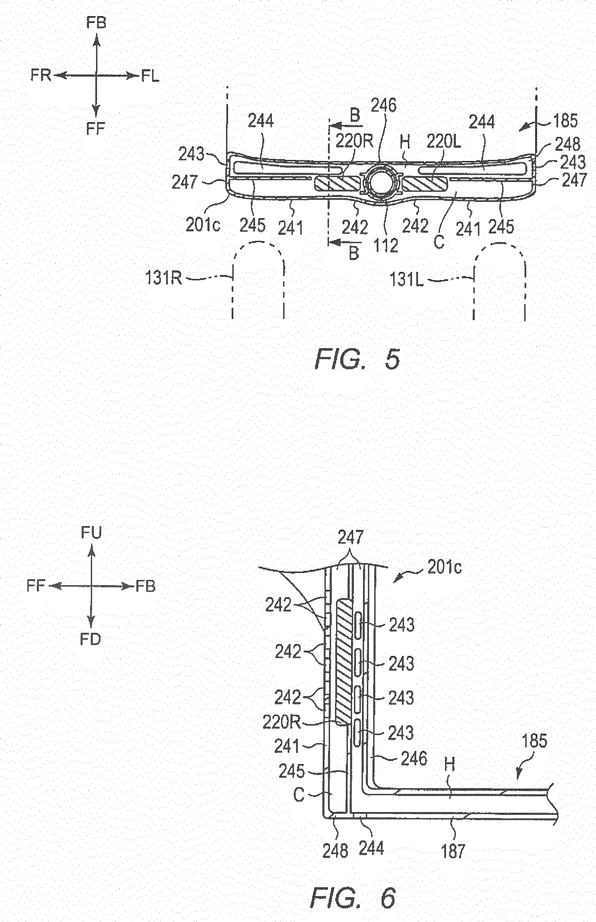

FIG. 5 is a cross-sectional view of line A-A of FIG. 4 showing a configuration of the leg shield. FIG. 6 is a cross-sectional view of line B-B of FIG. 5 showing a configuration of the leg shield.

Leg shield 201c includes front wall 241, rear wall 246, side wall 247, separation walls 245, air intake ports 242 (indicated by broken lines in FIG. 2), and air outlet ports 243 and 244. A plurality of air intake ports 242 are provided. A plurality of air outlet ports 243 and 244 are provided. The number of air intake ports 242 may be one. The number of air outlet ports 243 and 244 may be one.

Air intake ports 242 are provided on front wall 241 of leg shield 201c. Air intake ports 242 are provided forward of left radiator 220L and right radiator 220R in the front-rear direction of body frame 110.

Separation walls 245 separate the space in leg shield 201c into space C linked with the front surface of radiator 220 and another space H linked with the rear surface of radiator 220. Specifically, separation wall 245 separates the space in leg shield 201c into space C linked with the front surface of left radiator 220L and another space H linked with the rear surface of left radiator 220L. In addition, separation wall 245 separates the space in leg shield 201c into space C linked with the front surface of right radiator 220R and another space H linked with the rear surface of right radiator 220R. Space C linked with left radiator 220L and space C linked with right radiator 220R may be linked with each other or may be separated from each other. Space H linked with left radiator 220L and space H linked with right radiator 220R may be linked with each other or may be separated from each other. The air of space C passes through radiator 220 from the front surface toward the rear surface of radiator 220 and flows to space H.

Air outlet ports 243 are provided in side walls 247 of leg shield 201c and are linked with space H in which the air that has passed through left radiator 220L and right radiator 220R flows. Air outlet ports 244 are provided in bottom wall 248 of leg shield 201c or bottom wall 187 of floor portion 201d and are linked with space H in which the air that has passed through left radiator 220L and right radiator 220R flows.

According to this configuration, the air that has passed between left front wheel 131L and right front wheel 131R and below the lower end of lower cross member 142 of link mechanism 140 in the up-down direction of body frame 110 with low resistance while vehicle 100 runs passes through radiator 220 via air intake ports 242 of leg shield 201c. Therefore, the air that has passed through while vehicle 100 runs passes through left radiator 220L and right radiator 220R. The air that has passed through is discharged to the outside of leg shield 201c from air outlet ports 243 and 244 of leg shield 201c.

### <Link Mechanism>

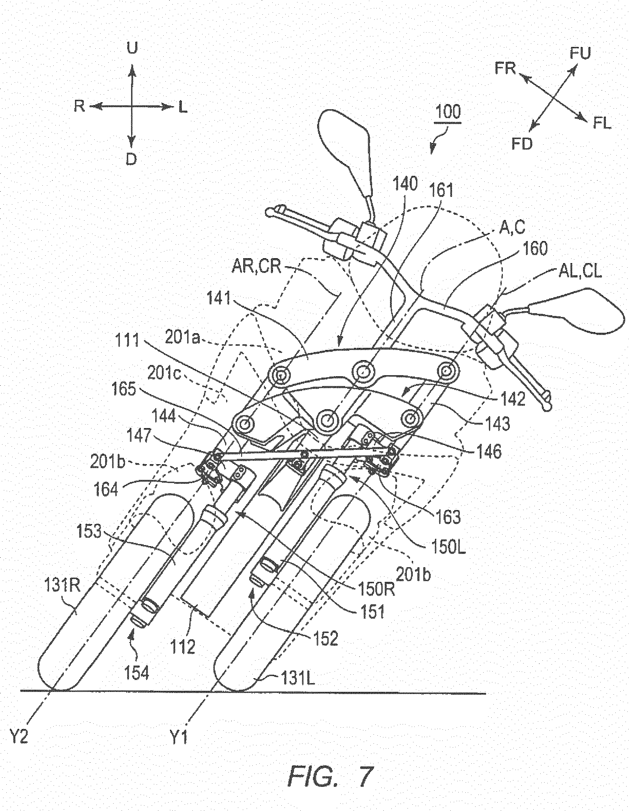

FIG. 7 is a front view showing a state of the link mechanism and the surroundings of the link mechanism when the vehicle tilts.

As shown in FIGS. 2 and 7, link mechanism 140 has a configuration of a parallel four-bar linkage (also called a parallelogram link).

Link mechanism 140 is supported by link support 111 of body frame 110. Link mechanism 140 includes upper cross member 141, lower cross member 142, left-side rod 143, and right-side rod 144 as components for performing a tilting action of vehicle 100. Link mechanism 140 is disposed above left front wheel 131L and right front wheel 131R in the up-down direction of body frame 110 with body frame 110 in the upright state. Link mechanism 140 is disposed above left front wheel 131L and right front wheel 131R in the up-down direction of body frame 110 in a front view with body frame 110 in the upright state. Link mechanism 140 is disposed above left front wheel 131L and right front wheel 131R in the up-down direction of body frame 110 in a side view with body frame 110 in the upright state. Therefore, there is no need to increase the distance between left front wheel 131L and right front wheel 131R in order to dispose link mechanism 140, thus making it possible to downsize body frame 110 in the left-right direction.

Upper cross member 141, lower cross member 142, left side rod 143, and right side rod 144 of link mechanism 140 are disposed below handlebar 160 in the up-down direction of body frame 110 and above the upper ends of left front wheel 131L and right front wheel 131R in the up-down direction of body frame 110. Upper cross member 141, lower cross member 142, left side rod 143, and right side rod 144 of link mechanism 140 are disposed behind the rotation centers of left front wheel 131L and right front wheel 131R in the front-rear direction of body frame 110.

An intermediate portion of upper cross member 141 is supported by link support 111. Upper cross member 141 is supported so as to be turnable around upper axis A (see FIG. 3) extending in the front-rear direction of body frame 110. Specifically, upper axis A is parallel to plane FF-FU and is tilted 45 degrees or less in the direction of arrow FU from arrow FF.

A left end portion of upper cross member 141 is supported by left-side rod 143. Upper cross member 141 is turnable relative to left-side rod 143, around upper left axis AL parallel to upper axis A. A right end portion of upper cross member 141 is supported by right-side rod 144. Upper cross member 141 is turnable relative to right-side rod 144, around upper right axis AR parallel to upper axis A.

An intermediate portion of lower cross member 142 is supported by link support 111. Lower cross member 142 is supported so as to be turnable around lower axis C (see FIG. 3) parallel to upper axis A. Lower cross member 142 is disposed below upper cross member 141 in the up-down direction of body frame 110. Lower cross member 142 has substantially the same length as the length of upper cross member 141 in the vehicle width direction and is disposed parallel to upper cross member 141.

A left end of lower cross member 142 is supported by left-side rod 143. Lower cross member 142 is turnable relative to left-side rod 143, around lower left axis CL parallel to lower axis C. A right end portion of lower cross member 142 is supported by right-side rod 144. Lower cross member 142 is turnable relative to right-side rod 144, around lower right axis CR parallel to lower axis C.

Although not particularly limited, lower cross member 142 of link mechanism 140 in Embodiment 1 includes: front lower cross member 142a including a part positioned forward of link support 111, left side rod 143, and right side rod 144 in the front-rear direction of body frame 110; and rear lower cross member 142b including a part positioned behind link support 111, left side rod 143, and right side rod 144 in the front-rear direction of body frame 110 (see FIGS. 3 and 4).

Left side rod 143 is disposed on the left of link support 111 in the left-right direction of body frame 110 and extends parallel to the direction of the extension of link support 111. Left side rod 143 is disposed above left front wheel 131L in the up-down direction of body frame 110. Left-side rod 143 supports left shock absorber 150L described later in a manner that makes left shock absorber 150L rotatable around left axis YI. Left shock absorber 150L is equivalent to an example of a left front wheel support unit of the present invention.

Right side rod 144 is disposed on the right of link support 111 in the left-right direction of body frame 110 and extends parallel to the direction of the extension of link support 111. Right side rod 144 is disposed above right front wheel 131R in the up-down direction of body frame 110. Right-side rod 144 supports right shock absorber 150R described later in a manner that makes right shock absorber 150R rotatable around right axis Y2. Right shock absorber 150R is equivalent to an example of a right front wheel support unit of the present invention.

In this way, upper cross member 141, lower cross member 142, left-side rod 143, and right-side rod 144 are supported so that upper cross member 141 and lower cross member 142 maintain positions parallel to each other, and left-side rod 143 and right-side rod 144 maintain positions parallel to each other.

As shown in FIG. 7, link mechanism 140 tilts left front wheel 131L and right front wheel 131R when vehicle 100 tilts in the left-right direction (R-L direction). Link mechanism 140 relatively changes the levels of left front wheel 131L and right front wheel 131R in the up-down direction of body frame 110 (direction of arrows FU and FD) in response to body frame 110 that is tilting in the left-right direction.

As shown in FIG. 7, when body frame 110 tilts to the left in the left-right direction of body frame 110, the left part of link mechanism 140 is displaced upward (direction of arrow FU) in the up-down direction of body frame 110 relative to front cover 201a. The right part of link mechanism 140 is displaced downward (direction of arrow FD) in the up-down direction of body frame 110 relative to front cover 201a. On the other hand, when body frame 110 tilts to the right in the left-right direction of body frame 110, the right part of link mechanism 140 is displaced upward (direction of arrow FU) in the up-down direction of body frame 110 relative to front cover 201a. The left part of link mechanism 140 is displaced downward (direction of arrow FD) in the up-down direction of body frame 110 relative to front cover 201a. In this way, link mechanism 140 is displaced relative to front cover 201a and link support 111 within a predetermined movable range.

### <Steering Mechanism>

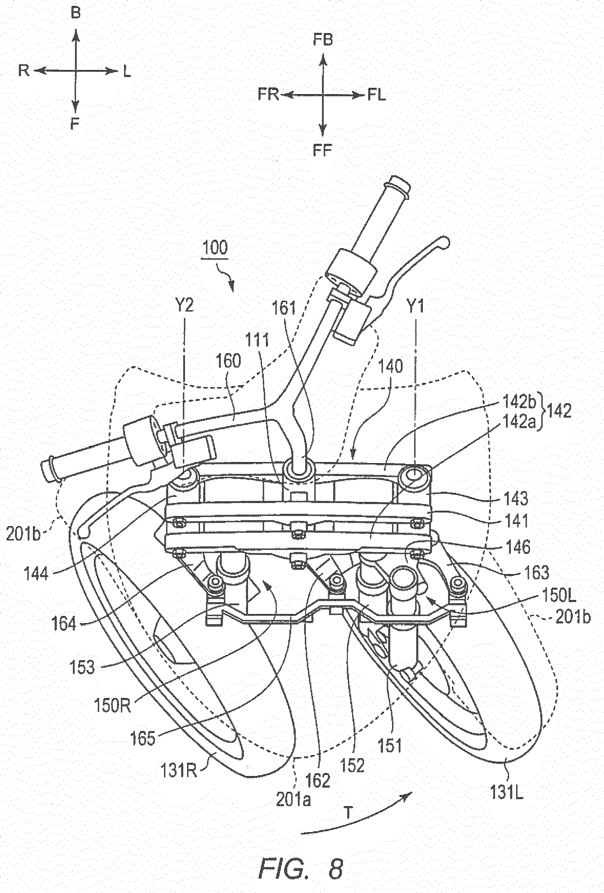

FIG. 8 is a plan view showing a state of the link mechanism and the surroundings of the link mechanism when the direction of the handlebar is changed.

A steering mechanism is disposed between handlebar 160 and left and right front wheels 131L and 131R. The steering mechanism includes steering shaft 161, center steering arm 162, tie rod 165, left steering arm 163, right steering arm 164, left shock absorber 150L, and right shock absorber 150R.

Left shock absorber 150L includes left dumper 151, left bracket 146, and left turn prevention mechanism 152. Left shock absorber 150L is supported by left-side rod 143 and tilts along with left-side rod 143.

Left damper 151 attenuates vibration from a road by, for example, a telescopic structure. An upper end of left damper 151 is fixed to left bracket 146. A lower end of the left damper supports left front wheel 131L. In this way, left damper 151 absorbs displacement of left front wheel 131L relative to an upper part of left damper 151 in the up-down direction of body frame 110. The expansion and contraction direction of left damper 151 may be tilted from the up-down direction of body frame 110. In this case, left front wheel 131L is also displaced relative to the upper part of left damper 151 in the front-rear direction or the left-right direction of body frame 110. In this case, left damper 151 also absorbs the displacement of left front wheel 131L in the front-rear direction or the left-right direction.

Left turn prevention mechanism 152 is disposed parallel to left damper 151. Left turn prevention mechanism 152 has a telescopic structure. An upper end of left turn prevention mechanism 152 is fixed to left bracket 146. A lower end of left turn prevention mechanism 152 supports left front wheel 131L.

Left damper 151 and left turn prevention mechanism 152 support left front wheel 131L to associate left bracket 146 with left front wheel 131L to prevent a relative change in the direction of left bracket 146 and the direction of left front wheel 131L.

Right shock absorber 150R includes right damper 153, right bracket 147, and right turn prevention mechanism 154. Right shock absorber 150R is supported by right-side rod 144 and tilts along with right-side rod 144.

Right damper 153 attenuates vibration from a road by, for example, a telescopic structure. An upper end of right damper 153 is fixed to right bracket 147. A lower end of right damper 153 supports right front wheel 131R. In this way, right damper 153 absorbs displacement of right front wheel 131R relative to an upper part of right damper 153 in the up-down direction of body frame 110. The expansion and contraction direction of right damper 153 may be tilted from the up-down direction of body frame 110. In this case, right front wheel 131R is also displaced relative to the upper part of right damper 153 in the front-rear direction or the left-right direction of body frame 110. In this case, right damper 153 also absorbs the displacement in the front-rear direction or the left-right direction of right front wheel 131R.

Right turn prevention mechanism 154 is disposed parallel to right damper 153. Right turn prevention mechanism 154 has a telescopic structure. An upper end of right turn prevention mechanism 154 is fixed to right bracket 147. A lower end of right turn prevention mechanism 154 supports right front wheel 131R.

Right damper 153 and right turn prevention mechanism 154 support right front wheel 131R to associate right bracket 147 with right front wheel 131R to prevent a relative change in the direction of right bracket 147 and the direction of right front wheel 131R.

Center steering arm 162 and tie rod 165 are disposed above left front wheel 131L and right front wheel 131R in the up-down direction of body frame 110. One end portion of center steering arm 162 is fixed to steering shaft 161, and center steering arm 162 turns along with steering shaft 161. The other end portion of center steering arm 162 is supported by tie rod 165. Center steering arm 162 transmits the turning of steering shaft 161 to tie rod 165.

Left steering arm 163 is fixed to left bracket 146.

Right steering arm 164 is fixed to right bracket 147.

Tie rod 165 supports center steering arm 162, left steering arm 163, and right steering arm 164 and transmits the turning of center steering arm 162 to left steering arm 163 and right steering arm 164.

According to the configurations, when handlebar 160 is operated to turn steering shaft 161 and center steering arm 162, left bracket 146 and right bracket 147 turn at the same angle as shown in FIG. 7. As a result, left front wheel 131L and right front wheel 131R are steered in same direction T.

### <Advantageous Effects of Embodiment 1>

As described, according to vehicle 100 of Embodiment 1, power unit 170 can be cooled by the air that has passed while vehicle 100 runs, the air that has passed through the range below the lower end of lower cross member 142 of link mechanism 140 in the up-down direction of body frame 110, on the left of right front wheel 131R in the left-right direction of body frame 110, and on the right of left front wheel 131L in the left-right direction of body frame 110 in a front view and behind the front ends of right front wheel 131R and left front wheel 131L in the front-rear direction of body frame 110 in a side view with vehicle 100 in the upright state.

According to vehicle 100 of Embodiment 1, link mechanism 140 includes: right side rod 144; left side rod 143; upper cross member 141 including a right end portion that supports the upper part of right side rod 144 in a manner that makes the upper part turnable, a left end portion that supports the upper part of left side rod 143 in a manner that makes the upper part turnable, and an intermediate portion that is supported by body frame 110 in a manner that makes the intermediate portion turnable around an upper axis extending in the front-rear direction of body frame 110; and lower cross member 142 including a right end portion that supports the lower part of right side rod 144 in a manner that makes the lower part turnable, a left end portion that supports the lower part of left side rod 143 in a manner that makes the lower part is turnable, and an intermediate portion that is supported by body frame 110 in a manner that makes the intermediate portion turnable around a lower axis parallel to the upper axis. Right side rod 144 supports an upper part of the right front wheel support unit including the upper part and a lower part that supports right front wheel 131R in a manner that makes the upper part turnable around a right axis extending in the up-down direction of body frame 110. Left side rod 143 supports an upper part of the left front wheel support unit including the upper part and a lower part that supports left front wheel 131L in a manner that makes the upper part turnable around a left axis parallel to the right axis. Therefore, upper cross member 141 and lower cross member 142 of link mechanism 140 are provided above left front wheel 131L and right front wheel 131R in the up-down direction of body frame 110 with body frame 110 in the upright state. Thus, the vehicle of the first aspect is compact in the left-right direction of body frame 110.

According to vehicle 100 of Embodiment 1, power unit 170 is cooled by the air that has passed through the range below the lower end of lower cross member 142 of link mechanism 140 in the up-down direction of body frame 110, on the left of right front wheel 131R in the left-right direction of body frame 110, and on the right of left front wheel 131L in the left-right direction of body frame 110 in a front view and behind the front ends of right front wheel 131R and left front wheel 131L in the front-rear direction of body frame 110 in a side view, with body frame 110 in the upright state. As a result, power unit 170 can be efficiently cooled, and the front part of vehicle 100 can be downsized.

Therefore, power unit 170 can be efficiently cooled, and the front part of vehicle 100 can be downsized in the vehicle including tiltable body frame 110, left front wheel 131L, and right front wheel 131R.

According to vehicle 100 of Embodiment 1, at least part of radiator 220 in the front-rear direction of body frame 110 is disposed behind the rear end of lower cross member 142 of link mechanism 140 in the front-rear direction of body frame 110 in a plan view with body frame 110 in the upright state. Therefore, the front end part of vehicle 100 can be downsized.

According to vehicle 100 of Embodiment 1, at least part of radiator 220 is disposed below the lower end of lower cross member 142 of link mechanism 140 in the up-down direction of body frame 110 and between right front wheel 131R and left front wheel 131L in a front view of vehicle 100. Radiator 220 is disposed so that the area of the front surface thereof as viewed in the front-rear direction of body frame 110 is greater than the area of the front surface thereof as viewed in the left-right direction of body frame 110 and the area of the front surface thereof as viewed in the up-down direction of body frame 110. Therefore, high cooling efficiency of radiator 220 can be obtained.

According to vehicle 100, at least part of air intake ports 242 of the passage guiding the air to radiator 220 is disposed below the lower end of lower cross member 142 of link mechanism 140 in the up-down direction of body frame 110 and between right front wheel 131R and left front wheel 131L in a plan view of vehicle 100. Therefore, the air that has passed between right front wheel 131R and left front wheel 131L with low resistance while vehicle 100 runs can be led to radiator 220. Thus, high cooling efficiency of radiator 220 can be obtained.

According to vehicle 100 of Embodiment 1, at least part of radiator 220 is disposed below, in the up-down direction of body frame 110, the lower edge of front cover 201a in the up-down direction of body frame 110, in a front view with body frame 110 in the upright state. Therefore, the air that has passed between right front wheel 131R and left front wheel 131L while vehicle 100 runs can be led to radiator 220 without resistance from front cover 201a. Thus, high cooling efficiency of radiator 220 can be obtained.

Therefore, power unit 170 can be efficiently cooled in vehicle 100 including tiltable body frame 110, left front wheel 131L, and right front wheel 131R.

According to vehicle 100 of Embodiment 1, a flow of air is generated from the front to the rear in the front-rear direction of body frame 110 in a range below the lower end of lower cross member 142 of link mechanism 140 in the up-down direction of body frame 110, on the left of right front wheel 131R in the left-right direction of body frame 110, and on the right of left front wheel 131L in the left-right direction of body frame 110 in a front view and behind the front ends of right front wheel 131R and left front wheel 131L in the front-rear direction of body frame 110 in a side view, with body frame 110 in the upright state while vehicle 100 runs. The air flows from the front to the rear in the front-rear direction of body frame 110, between the bottom surface of vehicle 100 and the ground. Therefore, a flow of air with a high flow velocity is generated between the bottom surface of vehicle 100 and the ground. Thus, the flow of air with a high flow velocity generated in the lower part in the up-down direction of vehicle 100 generates negative pressure in the lower part in the up-down direction of vehicle 100. In vehicle 100, at least part of radiator 220 is disposed below the upper ends of right front wheel 131R and left front wheel 131L in the up-down direction of body frame 110, in a front view with body frame 110 in the upright state. Since radiator 220 is disposed at a low position near the bottom surface of vehicle 100, the flow of air passing through radiator 220 can be more easily formed. Therefore, high cooling efficiency of radiator 220 can be obtained. As a result, power unit 170 can be efficiently cooled, and the front part of vehicle 100 can be downsized in vehicle 100 including tiltable body frame 110, left front wheel 131L, and right front wheel 131R.

According to vehicle 100 of Embodiment 1, the air that has passed between right front wheel 131R and left front wheel 131L can be led to radiator 220 without being blocked by power unit 170. Therefore, high cooling efficiency of radiator 220 can be surely obtained. As a result, power unit 170 can be efficiently cooled, and the front part of vehicle 100 can be downsized in vehicle 100 including tiltable body frame 110, left front wheel 131L, and right front wheel 131R.

According to vehicle 100 of Embodiment 1, high cooling efficiency of radiator 220, an oil cooler, or an intercooler can be obtained while the front part of the vehicle is downsized. Therefore, power unit 170 can be efficiently cooled, and the front part of vehicle 100 can be downsized in vehicle 100 including tiltable body frame 110, left front wheel 131L, and right front wheel 131R.

According to vehicle 100 of Embodiment 1, the air that has passed between right front wheel 131R and left front wheel 131L can be applied to the engine. Therefore, the engine can be efficiently cooled, and the front part of vehicle 100 can be downsized in vehicle 100 including tiltable body frame 110, left front wheel 131L, and right front wheel 131R.

According to vehicle 100 of Embodiment 1, the air that has passed between right front wheel 131R and left front wheel 131L can be applied to the engine. Therefore, power unit 170 can be efficiently cooled, and the front part of vehicle 100 can be downsized in vehicle 100 including tiltable body frame 110, left front wheel 131L, and right front wheel 131R.

### <Variation 1>

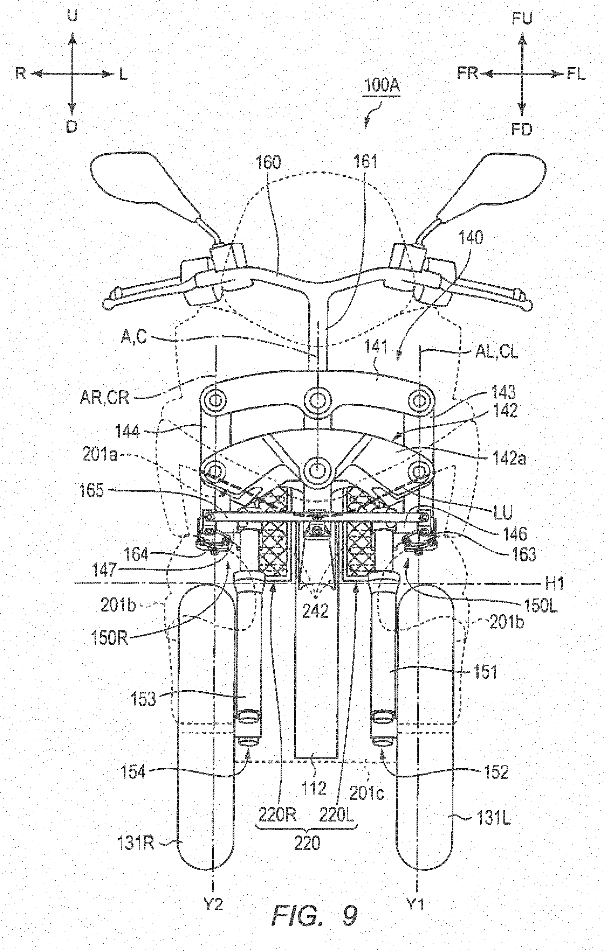

FIG. 9 is a front view showing Variation 1 of the disposition of the radiator.

In vehicle 100A of Variation 1, the position of radiator 220 is higher than the position thereof in Embodiment 1 (see FIG. 2). Left radiator 220L and right radiator 220R are higher than those in Embodiment 1 (see FIG. 2). The position of a plurality of air intake ports 242 provided on leg shield 201c is also high in accordance with radiator 220 (left radiator 220L and right radiator 220R). The other configurations are the same as in Embodiment 1.

In Variation 1, the lower end of radiator 220 is disposed higher than the upper end (line segment H1 of FIG. 9) of left front wheel 131L and right front wheel 131R in a front view of vehicle 100A. The lower end of left radiator 220L and the lower end of right radiator 220R are disposed higher than the upper ends of left front wheel 131L and right front wheel 131R in a front view of vehicle 100A.

Radiator 220 of Variation 1 includes left radiator 220L and right radiator 220R as in Embodiment 1. Radiator 220 is disposed inside of leg shield 201c. Left radiator 220L is disposed on the left of down frame 112 in the left-right direction of body frame 110, and right radiator 220R is disposed on the right of down frame 112 in the left-right direction of body frame 110. Radiator 220 is fixed to body frame 110. Left radiator 220L and right radiator 220R are fixed to down frame 112 through brackets.

Radiator 220 allows the air to pass therethrough from the front surface toward the rear surface to exchange heat between the air and coolant. Radiator 220 of Variation 1 is disposed in the same direction as in Embodiment 1.

In Variation 1, at least part of radiator 220 in the front-rear direction of body frame 110 is disposed behind the rear end of lower cross member 142 of link mechanism 140 in the front-rear direction of body frame 110 as in Embodiment 1. At least part of radiator 220 is disposed below the lower end of lower cross member 142 of link mechanism 140 in the up-down direction of body frame 110 and between left front wheel 131L and right front wheel 131R in a front view with body frame 110 in the upright state. The upright state of body frame 110 is a state in which left front wheel 131L and right front wheel 131R are not turned. At least part of radiator 220 is disposed below the lower edge (indicated by a thick broken line in FIG. 9) in the up-down direction of body frame 110 of front cover 201a, in a front view of body frame 110.

As described, according to vehicle 100A of Variation 1, the same advantageous effects as in Embodiment 1 can be brought about.

By the way, in vehicle 100A including left front wheel 131L and right front wheel 131R, water, mud, or the like splashed by left front wheel 131L and right front wheel 131R hits the region between right front wheel 131R and left front wheel 131L, when vehicle 110A runs on a paddle, for example. However, according to vehicle 100A of Variation 1, left radiator 220L and right radiator 220R are disposed above the upper ends of right front wheel 131R and left front wheel 131L in the up-down direction of body frame 110, and the influence of the splashed water and mud can be reduced.

In FIG. 9, the lower ends of left radiator 220L and right radiator 220R are higher than the upper ends of left front wheel 131L and right front wheel 131R. However, part of left radiator 220L and right radiator 220R or part of one of left radiator 220L and right radiator 220R may be higher than the upper ends of left front wheel 131L and right front wheel 131R. According to the configuration, the influence of the splashed water and mud can be reduced at the part higher than the upper ends of left front wheel 131L and right front wheel 131R, and an advantageous effect specific to Variation 1 can be brought about.

### <Variation2>

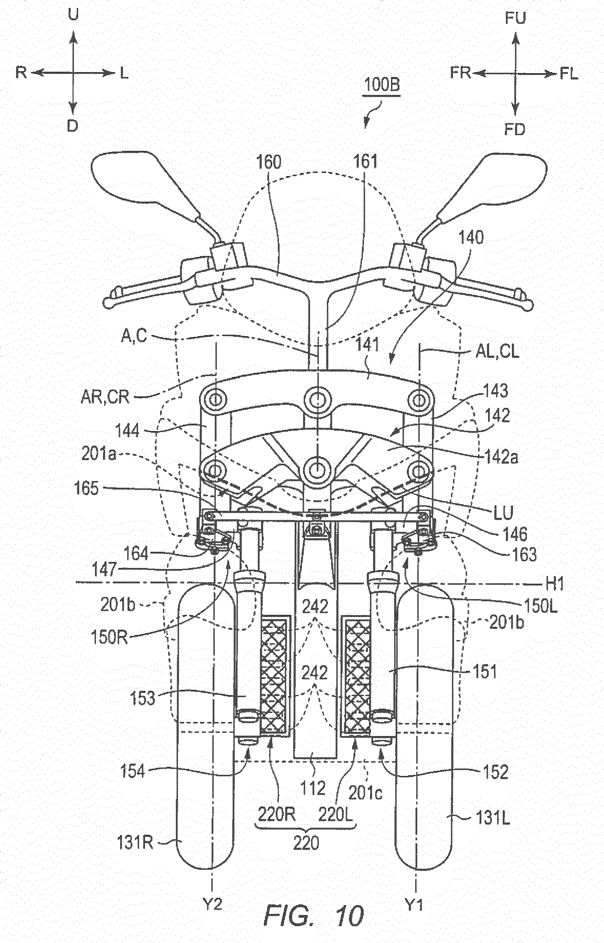

FIG. 10 is a front view showing Variation 2 of the disposition of the radiator.

In vehicle 100B of Variation 2, the disposition of radiator 220 is lower than the disposition in Embodiment 1 (see FIG. 2). The position of left radiator 220L and right radiator 220R is higher than the position thereof in Embodiment 1 (see FIG. 2). The position of a plurality of air intake ports 242 provided on leg shield 201c is also high in accordance with radiator 220 (left radiator 220L and right radiator 220R). The other configurations are the same as in Embodiment 1.

In Variation 2, the upper end of radiator 220 is disposed lower than the upper ends (line segment H1 of FIG. 10) of left front wheel 131L and right front wheel 131R in a front view of vehicle 100B. The upper ends of left radiator 220L and right radiator 220R are disposed lower than the upper ends (line segment H1 of FIG. 10) of left front wheel 131L and right front wheel 131R in a front view of vehicle 100B.

Radiator 220 of Variation 2 includes left radiator 220L and right radiator 220R as in Embodiment 1. Radiator 220 is disposed inside of leg shield 201c. Left radiator 220L is disposed on the left of down frame 112 in the left-right direction of body frame 110, and right radiator 220R is disposed on the right of down frame 112 in the left-right direction of body frame 110. Radiator 220 is fixed to body frame 110. Left radiator 220L and right radiator 220R are fixed to down frame 112 through brackets.

Radiator 220 allows the air to pass therethrough from the front surfaces toward the rear surfaces to exchange heat between the air and coolant. Radiator 220 of Variation 2 is disposed in the same direction as in Embodiment 1.

In Variation 2, at least part of radiator 220 in the front-rear direction of body frame 110 is disposed behind the rear end of lower cross member 142 of link mechanism 140 in the front-rear direction of body frame 110, as in Embodiment 1. At least part of radiator 220 is disposed below the lower end of lower cross member 142 of link mechanism 140 in the up-down direction of body frame 110 and between left front wheel 131L and right front wheel 131R, in a front view with body frame 110 in the upright state. The upright state of body frame 110 is a state in which left front wheel 131L and right front wheel 131R are not turned. At least part of radiator 220 is disposed below the lower edge (indicated by a thick broken line in FIG. 10) of front cover 201a in the up-down direction of body frame 110 in a front view of body frame 110.

As described, according to vehicle 100B of Variation 2, the same advantageous effects as in Embodiment 1 can be brought about.

While vehicle 100B runs, a high-speed air flow is generated between the bottom of vehicle 100B and the ground. Therefore, negative pressure with which the surrounding air is attracted to the high-speed air is generated at the lower part of vehicle 100B. According to vehicle 100B of Variation 2, radiator 220 is disposed near the bottom part of vehicle 100B. Therefore, the negative pressure at the lower part of vehicle 100B can draw the air, and the air can smoothly flow from the front surface of radiator 220 toward the rear surface thereof. Thus, higher cooling efficiency of radiator 220 can be obtained.

In FIG. 10, the upper ends of left radiator 220L and right radiator 220R are lower than the upper ends of left front wheel 131L and right front wheel 131R. However, only part of left radiator 220L and right radiator 220R or only part of one of left radiator 220L and right radiator 220R may be lower than the upper ends of left front wheel 131L and right front wheel 131R. According to the configuration, the negative pressure at the lower part of vehicle 100B can draw the air at the part lower than the upper ends of left front wheel 131L and right front wheel 131R, and higher cooling efficiency can be obtained. An advantageous effect specific to Variation 2 is brought about.

### <Embodiment 2>

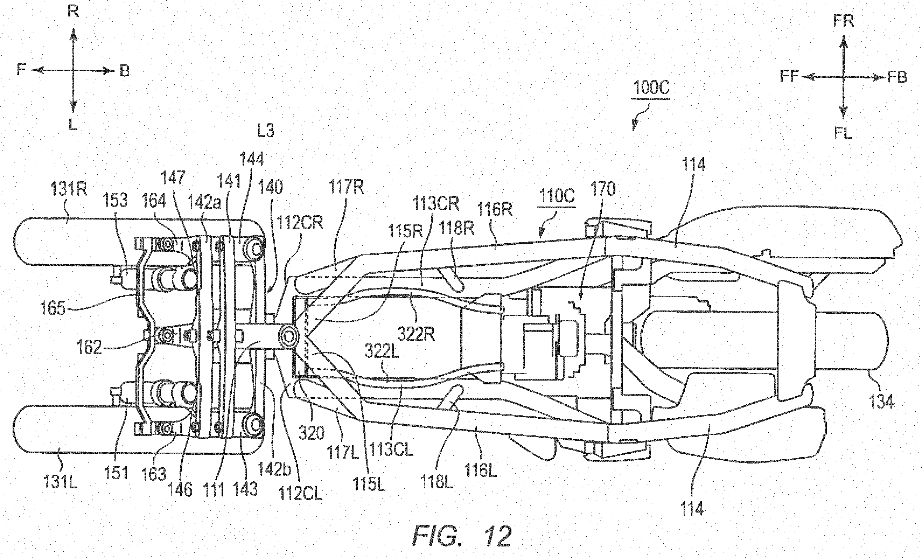

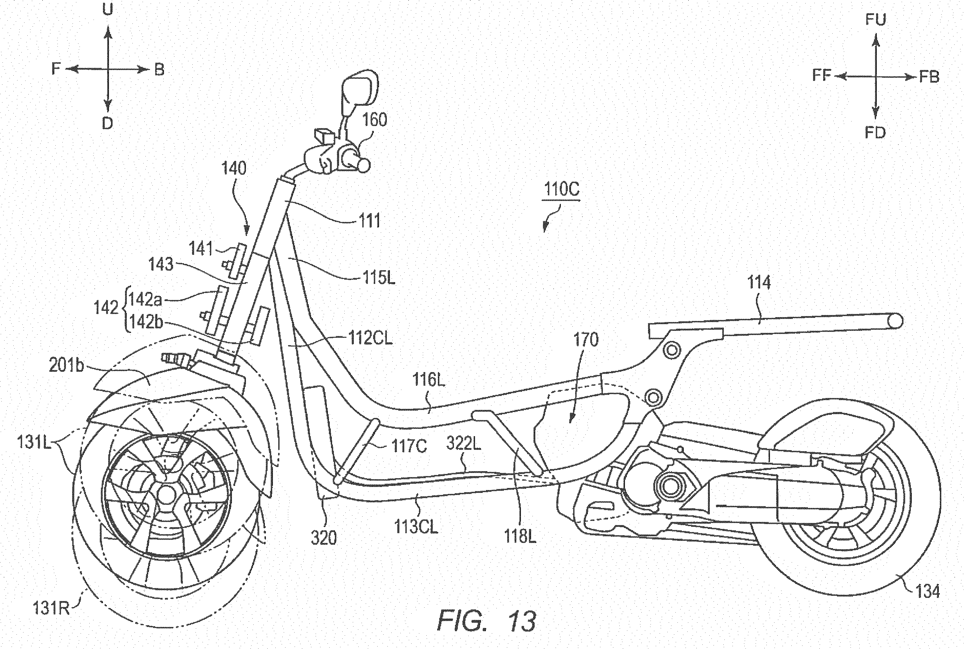

FIG. 11 is a front view showing a disposition of a radiator in a vehicle of Embodiment 2 of the present invention. FIG. 12 is a plan view showing a configuration in which an exterior (body cover, seat, and the like) and the handlebar are removed from the vehicle of Embodiment 2. FIG. 13 is a side view showing a disposition relationship between the body frame and the radiator in the vehicle of Embodiment 2. In FIG. 13, alternate long and two short dashes lines indicate left front wheel 131L and right front wheel 131R when vehicle 100C tilts in the left-right direction.

In vehicle 100C of Embodiment 2, body frame 110C (see FIG. 12), radiator 320, and a fixing structure of radiator 320 are different from Embodiment 1. The other configurations are the same as those in Embodiment 1. The components identical to those in Embodiment 1 are assigned the same reference signs, and the detailed description of the components will not be repeated.

Body frame 110C of Embodiment 2 includes link support 111, lower-left down frame 112CL, lower-right down frame 112CR, left underframe 113CL, right underframe 113CR, left and right rear frames 114, upper left down frame 115L, upper right down frame 115R, left intermediate frame 116L, right intermediate frame 116R, left front vertical frame 117L, right front vertical frame 117R, left rear vertical frame 118L, and right rear vertical frame 118R.

One end of lower-left down frame 112CL and one end of lower-right down frame 112CR are combined with each other and connected to link support 111. Lower-left down frame 112CL and lower-right down frame 112CR are disposed side by side in the left-right direction of body frame 110C, Lower-left down frame 112CL extends from link support 111 to the left part of floor portion 201d of vehicle 100C. Lower-right down frame 112CR extends from link support 111 to the right part of floor portion 201d of vehicle 100C.

One end of upper left down frame 115L and one end of upper right down frame 115R are combined with each other and connected to link support 111. Upper left down frame 115L and upper right down frame 115R are disposed side by side in the left-right direction of body frame 110C. Upper left down frame 115L extends below in the up-down direction of body frame 110C from link support 111 and to the left in the left-right direction of body frame 110C. Upper right down frame 115R extends below in the up-down direction of body frame 110C from link support 111 and to the right in the left-right direction of body frame 110C.

Left underframe 113CL extends from the lower end of lower-left down frame 112CL to left rear frame 114. Right underframe 113CR extends from the lower end of lower-right down frame 112C to right rear frame 114.

Left intermediate frame 116L extends from the lower end of upper left down frame 115L to left rear frame 114. Right intermediate frame 116R extends from the lower end of upper right down frame 115R to right rear frame 114.

Left front vertical frame 117L and left rear vertical frame 118L are placed between left underframe 113CL and left intermediate frame 116L to link left underframe 113CL and left intermediate frame 116L

Right front vertical frame 117R and right rear vertical frame 118R are placed between right underframe 113CR and right intermediate frame 116R to link right underframe 113CR and right intermediate frame 116R.

Vehicle 100C of Embodiment 2 includes radiator 320. Vehicle 100C of Embodiment 2 includes one radiator 320. Radiator 320 is disposed inside of leg shield 201c. Radiator 320 is disposed between lower-left down frame 112CL and lower-right down frame 112CR. Radiator 320 is supported by body frame 110C. Radiator 320 is fixed to lower-left down frame 112CL and lower-right down frame 112CR through brackets.

Radiator 320 allows the air to pass therethrough from the front surface thereof toward the rear surface thereof to exchange heat between the air and coolant. Radiator 320 is disposed so that the area of the front surface thereof as viewed in the front-rear direction of body frame 110C is greater than the area of the front surface thereof as viewed in the left-right direction of body frame 110C. Radiator 320 is disposed so that the area of the front surface thereof as viewed in the front-rear direction of body frame 110C is greater than the area of the front surface thereof as viewed in the up-down direction of body frame 110C.

Here, the area of the front surface as viewed in the front-rear direction of body frame 110C means an area of the shadow of the front surface generated on a plane perpendicular to the front-rear direction when light parallel to the front-rear direction is applied. The area of the front surface as viewed in the left-right direction of body frame 110 means an area of the shadow of the front surface generated on a plane perpendicular to the left-right direction when light parallel to the left-right direction is applied. The area of the front surface as viewed in the up-down direction of body frame 110C denotes an area of the shadow of the front surface generated on a plane perpendicular to the up-down direction when light parallel to the up-down direction is applied. The area of the front surface means an area of the front surface when a radiator disposed in the same way as in the on-board state is viewed alone. For example, when radiator 320 is hidden under the cover, the area of the front surface means an area of the front surface of the radiator alone without the cover.

A fan that generates a negative pressure on the rear surface of radiator 320 may be attached to radiator 320. In this case, the surface side of radiator 320 where the fan is attached is the rear surface of radiator 320.

At least part of radiator 320 in the front-rear direction of body frame 110C is disposed behind the rear end of lower cross member 142 of link mechanism 140 in the front-rear direction of body frame 110C. At least part of radiator 320 is disposed below the lower end of lower cross member 142 of link mechanism 140 in the up-down direction of body frame 110C and between left front wheel 131L and right front wheel 131R in a front view with body frame 110C in the upright state. The upright state of body frame 110C is a state in which left front wheel 131L and right front wheel 131 R are not turned.

Radiator 320 circulates the coolant between radiator 320 and power unit 170 through pipes 322L and 322R. Pipes 322L and 322R are supported by body frame 110C. Left pipe 322L extends from radiator 320 to power unit 170 along left underframe 113CL. Right pipe 322R extends from radiator 320 to power unit 170 along right underframe 113CR. Left pipe 322L may be fixed to extend from radiator 320 to power unit 170 along another frame such as left intermediate frame 116L. Right pipe 322R may be fixed so as to extend from radiator 320 to power unit 170 along another frame such as right intermediate frame 116R. Left pipe 322L and right pipe 322R may not be disposed symmetrically. Two pipes may be disposed along the left part of body frame 110C. Two pipes may be disposed along the right part of body frame 110C.

As described, according to vehicle 100C of Embodiment 2, a space without a frame can be obtained in an area at the center of leg shield 201c in the left-right direction based on the frame configuration described above. Therefore, radiator 320 can be easily disposed and fixed in the space.

According to vehicle 100C, the air that has passed between right front wheel 131R and left front wheel 131L and below the lower end of lower cross member 142 of link mechanism 140 in the up-down direction of body frame 110C with low resistance while vehicle 100C runs can be led to radiator 320. Therefore, high cooling efficiency of radiator 320 can be obtained.

Therefore, power unit 170 can be efficiently cooled in vehicle 100C including tiltable body frame 110C, left front wheel 131L, and right front wheel 131R.

### <Embodiment 3>

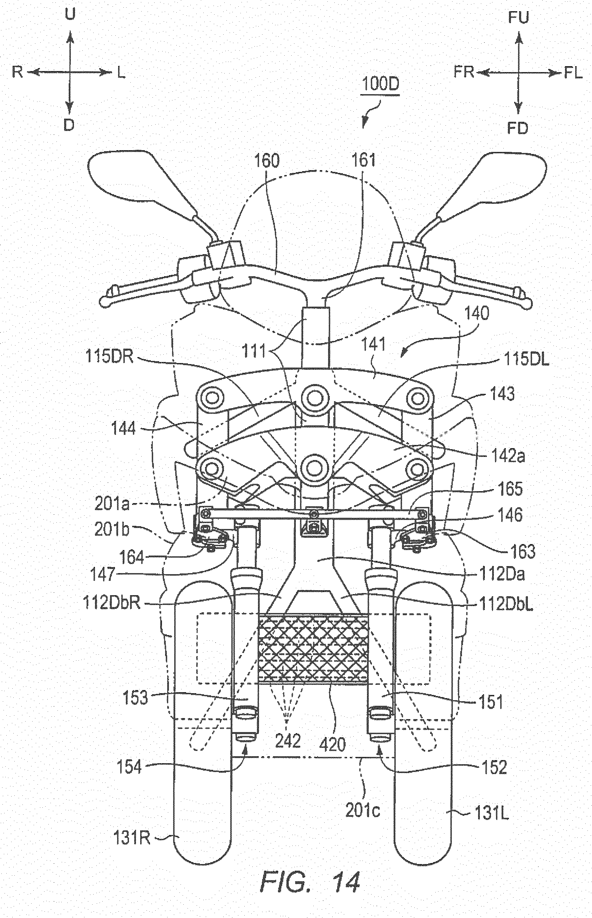

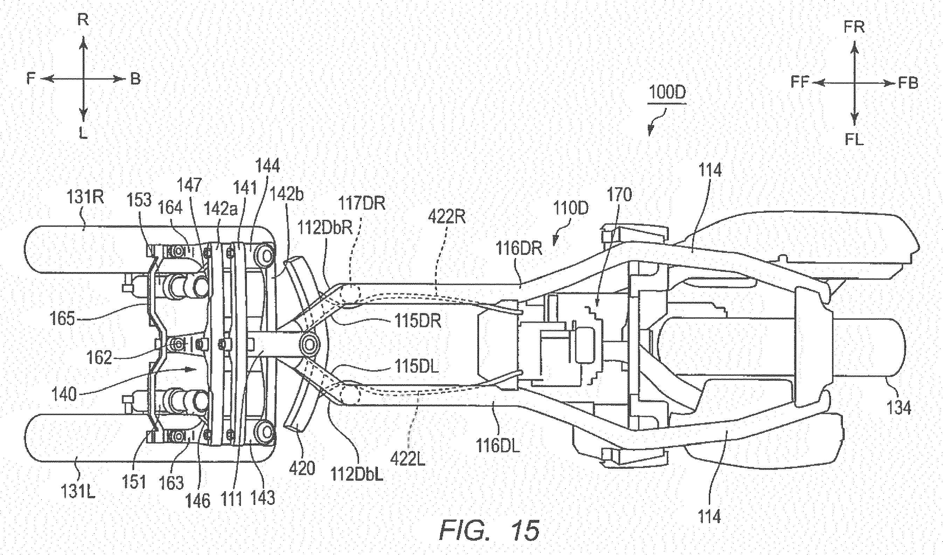

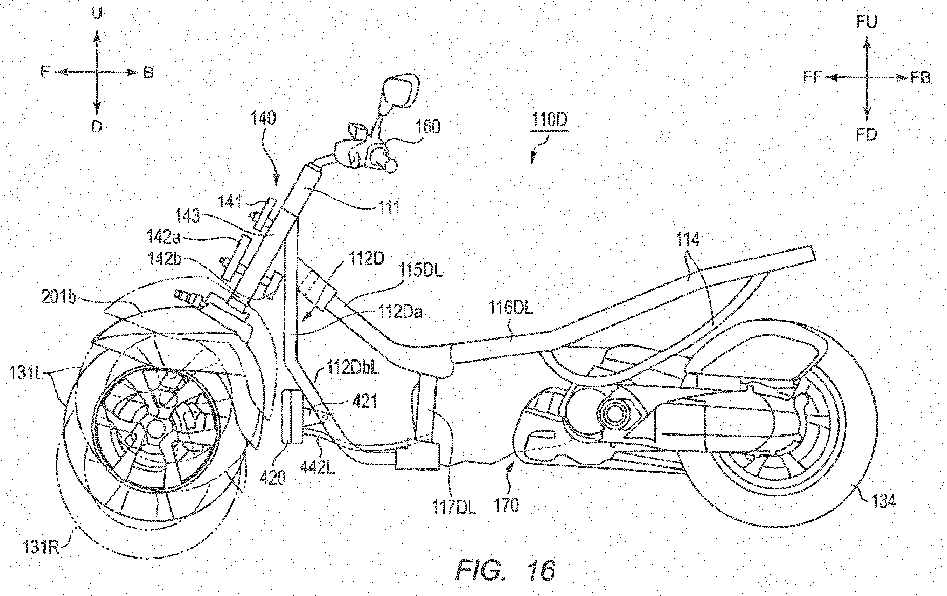

FIG. 14 is a front view showing a disposition of a radiator in a vehicle of Embodiment 3 of the present invention. FIG. 15 is a plan view showing a configuration in which the exterior (body cover, seat, and the like) and the handlebar are removed from the vehicle of Embodiment 3. FIG. 16 is a side view showing a disposition relationship between a body frame and the radiator in the vehicle of Embodiment 3. In FIG. 16, alternate long and two short dashes lines indicate left front wheel 131L and right front wheel 131R when vehicle 100D tilts in the left-right direction.

In vehicle 100D of Embodiment 3, body frame 110D (see FIG. 15), radiator 420, and a fixing structure of radiator 420 are different from Embodiment 1. The other configurations are the same as those in Embodiment 1. The components identical to those in Embodiment 1 are assigned the same reference signs, and the detailed description of the components will not be repeated.

Body frame 110D of Embodiment 3 includes link support 111, lower down frame 112D (see FIG. 16), upper left down frame 115DL, upper right down frame 115DR, left vertical frame 117DL, right vertical frame 117DR, left intermediate frame 116DL, right intermediate frame 116DR, and left and right rear frames 114.

Lower down frame 112D includes: one base 112Da extending in the up-down direction; and branched left lower part 112DbL and right lower part 112DbR. The upper end of base 112Da is connected to link support 111. Base 112Da extends in the up-down direction of body frame 110D. One end of left lower part 112DbL is linked to the lower end of base 112Da and extends below in the up-down direction of body frame 110D and to the left in the left-right direction of body frame 110D. One end of right lower part 112DbR is linked to the lower end of base 112Da and extends below in the up-down direction of body frame 110D and to the right in the left-right direction of body frame 110D. Left lower part 112DbL and right lower part 112DbR are equivalent to inclination portions inclined so that the rear parts are positioned below the front parts in the up-down direction of body frame 110D, behind link mechanism 140 in the front-rear direction of body frame 110D and forward of seating surface 181 of seat 180 on which the rider sits in the front-rear direction of body frame 110D. The inclination portions may be composed of a plurality of frames such as left lower part 112DbL and right lower part 112DbR or may be composed of one frame.

One end of upper left down frame 115DL and one end of upper right down frame 115DR are combined with each other and connected to link support 111. Upper left down frame 115DL and upper right down frame 115DR are disposed side by side in the left-right direction of body frame 110D. Upper left down frame 115DL extends below in the up-down direction of body frame 110D from link support 111 and to the left in the left-right direction of body frame 110D. Upper right down frame 115DR extends below in the up-down direction of body frame 110D from link support 111 and to the right in the left-right direction of body frame 110D.

Left intermediate frame 116DL extends from the lower end of upper left down frame 115DL to left rear frame 114. Right intermediate frame 116DR extends from the lower end of upper right down frame 115DR to right rear frame 114.

Left vertical frame 117DL is placed between the rear end of left lower part 112DbL of lower down frame 112D and the rear end of upper left down frame 115DL. Right vertical frame 117DR is constructed between the rear end of right lower part 112DbR of lower down frame 112D and the rear end of upper right down frame 115DR.

Vehicle 100D of Embodiment 3 includes radiator 420. Vehicle 100D of Embodiment 3 includes one radiator 420. Radiator 420 is disposed inside of leg shield 201c. Radiator 420 is disposed forward of left lower part 112DbL and right lower part 112DbR of lower down frame 112D in the front-rear direction of body frame 1100. Radiator 420 is supported by body frame 110D. Radiator 420 is fixed to left lower part 112DbL and right lower part 112DbR through bracket 421 (see FIG. 16).

Radiator 420 allows the air to pass therethrough from the front surface thereof toward the rear surface thereof to release the heat in the front-rear direction of body frame 110D. Radiator 420 is disposed so that the area of the front surface as viewed in the front-rear direction of body frame 110D is greater than the area of the front surface as viewed in the left-right direction of body frame 110D. Radiator 420 is disposed so that the area of the front surface as viewed in the front-rear direction of body frame 110D is greater than the area of the front surface as viewed in the up-down direction of body frame 110D.

Here, the area of the front surface as viewed in the front-rear direction of body frame 110D means an area of the shadow of the front surface generated on a plane perpendicular to the front-rear direction when light parallel to the front-rear direction is applied. The area of the front surface as viewed in the left-right direction of body frame 110D means an area of the shadow of the front surface generated on a plane perpendicular to the left-right direction when light parallel to the left-right direction is applied. The area of the front surface as viewed in the up-down direction of body frame 110D means an area of the shadow of the front surface generated on a plane perpendicular to the up-down direction when light parallel to the up-down direction is applied. The area of the front surface means an area of the front surface when a single radiator disposed in the same way as in the on-board state is viewed. For example, when radiator 420 is hidden under a cover, the area means an area of the front surface of the single radiator from which the cover is removed.

In radiator 420, a fan that generates a negative pressure may be attached to the rear surface of radiator 420. In this case, the surface side of radiator 420 where the fan is attached is the rear surface of radiator 420.

In the front-rear direction of body frame 110D, at least part of radiator 420 is disposed behind the rear end of lower cross member 142 of link mechanism 140 in the front-rear direction of body frame 110D. At least part of radiator 420 is disposed below the lower end of lower cross member 142 of link mechanism 140 in the up-down direction of body frame 110D and between left front wheel 131L and right front wheel 131R in a front view with body frame 110D in the upright state. The upright state of body frame 110D is a state in which left front wheel 131L and right front wheel 131R are not turned.

Radiator 420 circulates the coolant between radiator 420 and power unit 170 through pipes 422L and 422R. Pipes 422L and 422R are supported by body frame 110D. Left pipe 422L extends from radiator 420 to power unit 170 along left lower part 112DbL of lower down frame 112D, Right pipe 422R extends from radiator 420 to power unit 170 along right lower part 112DbR of lower down frame 112D. Left pipe 422L may be fixed to extend from radiator 420 to power unit 170 along other frames, such as upper left down frame 115DL and left intermediate frame 116DL. Right pipe 422R may be fixed to extend from radiator 420 to power unit 170 along other frames, such as upper right down frame 115DR and right intermediate frame 116DR. Left pipe 422L and right pipe 422R may not be disposed symmetrically. Two pipes may be disposed along the left part of body frame 110D. Two pipes may be disposed along the right part of body frame 110D.

As described, vehicle 100D of Embodiment 3 includes the inclination portions with the rear parts positioned below the front parts in body frame 110D in the up-down direction of body frame 110D, at parts forward of leg shield 201c in the front-rear direction of body frame 110D and below the lower end of link mechanism 140 based on the frame configuration described above. Therefore, a space can be obtained at the front part of the inclination portions in the front-rear direction of body frame 110D. Specifically, a space can be obtained at a position forward of left lower part 112DbL and right lower part 112DbR of lower down frame 112D in the front-rear direction of body frame 110D. Therefore, radiator 420 can be easily disposed and fixed in the space. This disposition can downsize the forefront of vehicle 100D.

According to vehicle 100D of Embodiment 3, the disposition of radiator 420 that can obtain high cooling efficiency can be realized without radiator 420 interfering with body frame 110D. Therefore, in vehicle 100 including tiltable body frame 110D, left front wheel 131L, and right front wheel 131R, power unit 170 can be efficiently cooled, and the front part of vehicle 100 can be downsized.

According to vehicle 100D of Embodiment 3, the air that has passed between right front wheel 131R and left front wheel 131L and below the lower end of lower cross member 142 of link mechanism 140 in the up-down direction of body frame 110D with a low resistance while vehicle 100D runs can be led to radiator 420. Therefore, high cooling efficiency of radiator 420 can be obtained.

As a result, power unit 170 can be efficiently cooled in vehicle 100D including tiltable body frame 110D, left front wheel 131L, and right front wheel 131R.

Each embodiment of the present invention have been described thus far.

Radiators 220L, 220R, 320, and 420 are used as examples of the heat exchanger that exchanges heat between the coolant and air in the description of the embodiments. However, the heat exchanger may be an oil cooler that circulates the oil of power unit 170 to cool the oil by heat exchange with air. The heat exchanger may be an intercooler that cools the compressed intake air of the engine by heat exchange with air and that supplies the air to power unit 170 through a pipe. Alternatively, the heat exchanger may be configured to perform heat exchange between air and fluid and to transmit the cooled fluid to power unit 170.

Moreover, each embodiment has been described with a configuration in which a heat exchanger is used to cool power unit 170, as an example. However, in the present invention, the power unit may be cooled by the air that has passed through a range below the lower end of the lower cross member of the link mechanism in the up-down direction of body frame 110, on the left of the right front wheel in the left-right direction of body frame 110, and on the right of the left front wheel in the left-right direction of body frame 110 in a front view and behind the front ends of the right front wheel and the left front wheel in the front-rear direction of body frame 110 in a side view, with the body frame in the upright state. Therefore, for example, the vehicle of the present invention may employ a configuration in which power unit 170 is cooled, without using the heat exchanger, by applying, to the engine of power unit 170, the air that has passed through a range below the lower end of lower cross member 142 of link mechanism 140 in the up-down direction of body frame 110, on the left of right front wheel 131R in the left-right direction of body frame 110, and on the right of left front wheel 131L in the left-right direction of body frame 110 in a front view and behind the front ends of right front wheel 131R and left front wheel 131L in the front-rear direction of body frame 110 in a side view, with body frame 110 in the upright state. For this configuration, an air-cooled engine may be employed. According to the configuration, power unit 170 can be efficiently cooled in vehicle 100 including tiltable body frame 110, left front wheel 131L, and right front wheel 131R.

Furthermore, for example, the present invention may employ a configuration of cooling the heat exchanger disposed above the lower end of the lower cross member of the link mechanism in the up-down direction of body frame 110 in a front view with the body frame in the upright state, by the air that has passed through a range below the lower end of the lower cross member of the link mechanism in the up-down direction of body frame 110, on the left of the right front wheel in the left-right direction of body frame 110, and on the right of the left front wheel in the left-right direction of body frame 110 in a front view and behind the front ends of the right front wheel and the left front wheel in the front-rear direction of body frame 110 in a side view, with the body frame in the upright state. In this case, it is preferable to provide a passage or an air passage cover for guiding the air that has passed through the range below the lower end of the lower cross member of the link mechanism in the up-down direction of body frame 110, on the left of the right front wheel in the left-right direction of body frame 110, and on the right of the left front wheel in the left-right direction of body frame 110 in a front view and behind the front ends of the right front wheel and the left front wheel in the front-rear direction of body frame 110 in a side view with the body frame in the upright state, to the heat exchanger disposed above the lower end of the lower cross member of the link mechanism in the up-down direction of body frame 110 in a front view, with the body frame in the upright state. Furthermore, for example, the present invention can have a configuration of cooling the heat exchanger disposed on the right of the right front wheel in the left-right direction of body frame 110 and on the left of the left front wheel in the left-right direction of body frame 110 in a front view with the body frame in the upright state, by the air that has passed through a range below the lower end of the lower cross member of the link mechanism in the up-down direction of body frame 110, on the left of the right front wheel in the left-right direction of body frame 110, and on the right of the left front wheel in the left-right direction of body frame 110 in a front view and behind the front ends of the right front wheel and the left front wheel in the front-rear direction of body frame 110 in a side view, with the body frame in the upright state. In this case, it is preferable to provide a passage or an air guide cover for guiding the air to the heat exchanger disposed on the right of the right front wheel in the left-right direction of body frame 110 and on the left of the left front wheel in the left-right direction of body frame 110 in a front view with the body frame in the upright state. The air to be guided in this case is the air that has passed through the range below the lower end of the lower cross member of the link mechanism in the up-down direction of body frame 110, on the left of the right front wheel in the left-right direction of body frame 110, and on the right of the left front wheel in the left-right direction of body frame 110 in a front view and behind the front ends of the right front wheel and the left front wheel in the front-rear direction of body frame 110 in a side view with the body frame in the upright state.

Radiators 220L, 220R, 320, and 420 are disposed inside of leg shield 201c, and a plurality of air intake ports 242 are provided on front wall 241 of leg shield 201c in the examples described in the embodiments. However, radiators 220L, 220R, 320, and 420 may be exposed to the outside of the vehicle without being covered by covers. Radiators 220L, 220R, 320, 420 may be disposed behind the radiator covers in the front-rear direction of body frame 110 and forward of the body covers in the front-rear direction of body frame 110 without being covered by the body covers.

Radiators 220L, 220R, 320, and 420 are disposed right behind a plurality of air intake ports 242 in the front-rear direction of body frame 110 in the examples described in the embodiments. However, the radiators may be disposed away from air intake ports 242, and passages for guiding the air from air intake ports 242 to the front surface of the radiators may be formed. In this case, the radiators can be disposed so that the air flowing through the passages passes through the radiators. When this condition is satisfied, the radiators may be disposed so that the areas of the front surfaces as viewed in the front-rear direction of body frame 110 are smaller than the areas of the front surfaces as viewed in the left-right direction of body frame 110. The radiators may be disposed so that the areas of the front surfaces as viewed in the front-rear direction of body frame 110 are smaller than the areas of the front surfaces as viewed in the up-down direction of body frame 110. The passages may be configured in any way as long as the air can be guided to the front surfaces of the radiators. For example, the passages may be included in the body cover or may be duct members different from the body cover. Alternatively, the passages may be formed using the body frames.

Vehicles 100 and 100A to 100D include floor portion 201d and leg shield 201c forward of seat 180 in the front-rear direction of body frame 110 in a plan view in the examples described in the embodiments. However, the vehicle according to the present invention may be of a type without floor portion 201d and leg shield 201c.

In the examples described in the embodiments, left damper 151 is disposed on the right of left front wheel 131L in the left-right direction of body frame 110, and right damper 153 is disposed on the left of right front wheel 131R in the left-right direction of body frame 110 in the left-right direction of body frame 110. However, left damper 151 may be disposed on the left of left front wheel 131L, and right damper 153 may be disposed on the left of right front wheel 131R in the left-right direction of body frame 110. When left damper 151 is disposed on the right of left front wheel 131L in the left-right direction of body frame 110, and right damper 153 is disposed on the left of right front wheel 131R in the left-right direction of body frame 110, at least part of the radiator and the air intake ports may be disposed between left damper 151 and right damper 153 in a front view of vehicle 100.

Although link support 111 also serves as a head tube in the examples described in the embodiments, a head tube may be included separately from link support 111.

Power unit 170 includes the engine and the crankcase in the description of the embodiments. However, the power unit of the present invention is not limited to the one described in the embodiments. For example, power unit 170 may include no engine or crankcase, but may include a battery and an electric motor that receives power from the battery. In this case, the battery or the electric motor may be cooled by the air that has passed through a range below the lower end of the lower cross member of the link mechanism in the up-down direction of body frame 110, on the left of the right front wheel in the left-right direction of body frame 110, and on the right of the left front wheel in the left-right direction of body frame 110 in a front view and behind the front ends of the right front wheel and the left front wheel in the front-rear direction of body frame 110 in a side view, with the body frame in the upright state.

Power unit 170 is supported by rear frames 114 of the body frame in a manner that makes power unit 170 swingable through a swing arm in the description of the embodiments. However, the power unit of the present invention is not limited to the embodiments. For example, the power unit may be fixed to the body frame. In this case, the power unit may be disposed below the lower end of the lower cross member of the link mechanism in the up-down direction of body frame 110, on the left of the right front wheel in the left-right direction of body frame 110, and on the right of the left front wheel in the left-right direction of body frame 110 in a front view and may be disposed behind the rear end of the lower cross member of the link mechanism in the front-rear direction of body frame 110 and forward of the front end of the rear wheel in the front-rear direction of body frame 110 in a side view, with the body frame in the upright state.

In the description of the embodiments, the vehicle includes one or two radiators, and the radiators are disposed so that at least part of the radiators is behind the rear end of the lower cross member of the link mechanism in the front-rear direction of body frame 110 in a plan view with the body frame in the upright state. However, the radiators according to the present invention may include a plurality of radiators, and at least one of the plurality of radiators may be included in the present invention. Some of the plurality of radiators may not be included in the present invention. Meanwhile, all of the plurality of radiators may be included in the present invention.

In the link mechanism according to the present invention, the upper cross member may include: a front upper cross member including a part disposed forward of link support 111 in the front-rear direction of body frame 110; and a rear upper cross member including a part disposed behind link support 111 in the front-rear direction of body frame 110. The lower cross member may include only a front lower cross member or may include only a rear lower cross member. The link mechanism according to the present invention may include only the upper cross member and the lower cross member, and the link mechanism may also include one or a plurality of cross members disposed between the upper cross member and the lower cross member in the up-down direction of the body frame.

In the embodiments, at least part of link mechanism 140 is covered by front cover 201a of the body cover from the front in the front-rear direction of body frame 110. However, the present invention is not limited to these embodiments. The present invention may not include the body cover that covers the link mechanism from the front in the front-rear direction of body frame 110. Moreover, a member such as a headlight disposed forward of the link mechanism in the front-rear direction of body frame 110 may be included, and the front cover disposed around the member may cover at least part of the link mechanism from the front in the front-rear direction of body frame 110.

### Reference Signs list

100, 100A, 100B, 100C, 100D bodies
110, 110C, 110D body frames
111 link support
112 down frame
112CL lower-left down frame
112CR lower-right down frame
112DbL left lower part
112DbR right lower part
131L left front wheel
131R right front wheel
134 rear wheel
140 link mechanism
141 upper cross member
142 lower cross member
143 left-side rod
144 right-side rod
150L left shock absorber
150R right shock absorber
151 left damper
152 left turn prevention mechanism
153 right damper
154 right turn prevention mechanism
170 power unit
201a front cover
201c leg shield
220L, 220R, 320, 420 radiators
222 pipe
242 air intake port
243, 244 air outlet ports

## Claims

1. A vehicle comprising:
a body frame (110) that tilts in a left-right direction of the vehicle during left and right turns;
a right front wheel (131R) and a left front wheel (131L) disposed side by side in a left-right direction of the body frame (110);
a right-front-wheel support unit (150R) including an upper portion and a lower portion that supports the right front wheel (131R);
a left-front-wheel support unit (150L) including an upper portion and a lower portion that supports the left front wheel (131L);
a link mechanism (140) including
a right-side rod (144) that supports the upper portion of the right-front-wheel support unit (150R) in a manner that makes the upper portion thereof turnable around a right axis extending in an up-down direction of the body frame (110),
a left-side rod (144) that supports the upper portion of the left-front-wheel support unit (150L) in a manner that makes the upper portion thereof turnable around a left axis which is parallel to the right axis,
an upper cross member (141) including a right end portion that supports an upper part of the right-side rod (144) in a manner that makes the upper part thereof turnable, a left end portion that supports an upper part of the left-side rod (144) in a manner that makes the upper part thereof turnable, and an intermediate portion that is supported by the body frame (110) so as to be turnable around an upper axis extending in a front-rear direction of the body frame (110), and
a lower cross member (142) including a right end portion that supports a lower part of the right-side rod (144) in a manner that makes the lower part thereof turnable, a left end portion that supports a lower part of the left-side rod (144) in a manner that makes the lower part thereof turnable, and an intermediate portion that is supported by the body frame (110) so as to be turnable around a lower axis which is parallel to the upper axis,
a rear wheel (134); and
a power unit (170) that generates driving force of the rear wheel (134), **characterized in that**
the power unit (170) is supported by the body frame (110) and is cooled by air that has passed through a range below a lower end of the lower cross member (142) of the link mechanism (140) in the up-down direction of the body frame (110), on the left of the right front wheel (131R) in the left-right direction of the body frame (110), and on the right of the left front wheel (131L) in the left-right direction of the body frame (110) in a front view and behind front ends of the right front wheel (131R) and the left front wheel (131L) in the front-rear direction of the body frame (110) in a side view, with the body frame (110) in an upright state, wherein
a heat exchanger (220L,220R,320,420) is provided that releases heat; and
a pipe (222L,222R,322L,322R,422L,422R) that transmits a fluid cooled by the heat exchanger (220L,220R,320,420) to the power unit (170), wherein
the power unit (170) is disposed behind a rear end of the lower cross member (142) of the link mechanism (140) in the front-rear direction of the body frame (110) in a plan view with the body frame (110) in the upright state, and
at least part of the heat exchanger (220L,220R,320,420) is disposed behind the rear end of the lower cross member (142) of the link mechanism (140) in the front-rear direction of the body frame (110) in a plan view with the body frame (110) in the upright state,
the heat exchanger (220L,220R,320,420) is disposed forward of the power unit (170) in the front-rear direction of the body frame (110).

2. The vehicle according to claim 1, **characterized in that** at least part of the heat exchanger (220L,220R,320,420) is disposed below the lower end of the lower cross member (142) of the link mechanism (140) in the up-down direction of the body frame (110) and between the right front wheel (131R) and the left front wheel (131L) in a front view with the body frame (110) in the upright state, and
the heat exchanger (220L,220R,320,420) is disposed so that an area of a front surface of the heat exchanger (220L,220R,320,420) as viewed in the front-rear direction of the body frame (110) is greater than an area of the front surface as viewed in the left-right direction of the body frame (110) and greater than an area of the front surface as viewed in the up-down direction of the body frame (110), and the heat exchanger (220L,220R,320,420) releases the heat by allowing the air to pass through the heat exchanger (220L,220R,320,420) from the front surface toward a rear surface of the heat exchanger (220L,220R,320,420).

3. The vehicle according to claim 1, **characterized by**
an air intake port (242) of a passage that guides the air to the heat exchanger (220L,220R,320,420), wherein
at least part of the air intake port (242) is positioned in a range behind the rear end of the lower cross member (142) of the link mechanism (140) in the front-rear direction of the body frame (110) in a plan view with the body frame (110) in the upright state and below the lower end of the lower cross member (142) of the link mechanism (140) in the up-down direction of the body frame (110), on the left of the right front wheel (131R) in the left-right direction of the body frame (110), and on the right of the left front wheel (131L) in the left-right direction of the body frame (110) in a front view with the body frame (110) in the upright state, and
in the front-rear direction of the body frame (110), the heat exchanger (220L,220R,320,420) is disposed behind the air intake port (242) in the front-rear direction of the body frame (110).

4. The vehicle according to any one of claims 1 to 3, **characterized by** a front cover (201a) that covers a front of at least part of the link mechanism (140) in the front-rear direction of the body frame (110) in a front view with the body frame (110) in the upright state, wherein at least part of a lower edge of the front cover (201a) that is positioned forward of the link mechanism (140) in the front-rear direction of the body frame (110) is positioned above a lower end of the link mechanism (140) in the up-down direction of the body frame (110), wherein
at least part of the heat exchanger (220L,220R,320,420) is disposed below the lower edge of the front cover (201a) in the up-down direction of the body frame (110) in a front view with the body frame (110) in the upright state.

5. The vehicle according to any one of claims 1 to 4, **characterized in that** at least part of the heat exchanger (220L,220R,320,420) is disposed below upper ends of the right front wheel (131R) and the left front wheel (131L) in the up-down direction of the body frame (110) in a front view with the body frame (110) in the upright state.

6. The vehicle according to any one of claims 1 to 5, **characterized in that** at least part of the heat exchanger (220L,220R) is disposed above the upper ends of the right front wheel (131R) and the left front wheel (131L) in the up-down direction of the body frame (110) in a front view with the body frame (110) in the upright state.

7. The vehicle according to any one of claims 1 to 6, **characterized in that** the body frame (110) includes an inclination portion positioned behind the link mechanism (140) in the front-rear direction of the body frame (110) and forward of a seating surface (181) on which a rider sits in the front-rear direction of the body frame (110) with the body frame (110) in the upright state, the inclination portion being inclined so that a rear part of the inclination portion is positioned below a front part thereof in the up-down direction of the body frame (110), and
the heat exchanger (220L,220R,320,420) is disposed forward of the inclination portion of the body frame (110) in the front-rear direction of the body frame (110).

8. The vehicle according to any one of claims 1 to 7, **characterized in that** the heat exchanger (220L,220R,320,420) is a radiator, an oil cooler, or an intercooler.

9. The vehicle according to claim 1, **characterized in that** the power unit (170) includes an engine, and
the engine is disposed so as to receive air passing through a range below the lower end of the lower cross member (142) of the link mechanism (140) in the up-down direction of the body frame (110), on the left of the right front wheel (131R) in the left-right direction of the body frame (110), and on the right of the left front wheel (131L) in the left-right direction of the body frame (110) in a front view and behind the front ends of the right front wheel (131R) and the left front wheel (131L) in the front-rear direction of the body frame (110) in a side view, with the body frame (110) in the upright state.

10. The vehicle according to claim 9, **characterized in that** the power unit (170) is disposed below the lower end of the lower cross member (142) of the link mechanism (140) in the up-down direction of the body frame (110), on the left of the right front wheel (131R) in the left-right direction of the body frame (110), and on the right of the left front wheel (131L) in the left-right direction of the body frame (110) in a front view with the body frame (110) in the upright state, and
the power unit (170) is disposed behind the rear end of the lower cross member (142) of the link mechanism (140) in the front-rear direction of the body frame (110) and forward of a front end of the rear wheel (134) in the front-rear direction of the body frame (110) in a side view with the body frame (110) in the upright state.

## Patentansprüche

1. Ein Fahrzeug, das umfasst:
einen Körper-Rahmen (110), der sich in eine Links-Rechts-Richtung des Fahrzeugs neigt, während Links- und Rechts-Kurven;
ein rechtes Vorder-Rad (131R) und ein linkes Vorder-Rad (131L), die Seite an Seite in einer Links-Rechts-Richtung des Körper-Rahmens (110) positioniert sind;
eine Rechts-Vorder-Rad-Lager-Einheit (150R), die einen oberen Abschnitt und einen unteren Abschnitt, der das rechte Vorder-Rad (131R) lagert, beinhaltet;
eine Links-Vorder-Rad-Lager-Einheit (150L), die einen oberen Abschnitt und einen unteren Abschnitt, der das linke Vorder-Rad (131L) lagert;
einen Lenker-Mechanismus (140), der beinhaltet
einen Rechts-Seiten-Stab (144), der den oberen Abschnitt von der Rechts-Vorder-Rad-Lager-Einheit (150R) lagert, in einer Weise, die den oberen Abschnitt derselben drehbar um eine rechte Achse macht, die sich in eine Oben-Unten-Richtung von dem Körper-Rahmen (110) erstreckt,
einen Links-Seiten-Stab (144), der den oberen Abschnitt von der Links-Vorder-Rad-Lager-Einheit (150L) lagert, in einer Weise, die den oberen Abschnitt derselben drehbar um eine linke Achse macht, die parallel zu der rechten Achse ist,
ein oberes Quer-Element (141), das einen rechten End-Abschnitt, der einen oberen Teil von dem Rechts-Seiten-Stab (144) lagert, in einer Weise, die den oberen Teil desselben drehbar macht, einen linken End-Abschnitt, der einen oberen Teil von dem Links-Seiten-Stab (144) lagert, in einer Weise, die den oberen Teil desselben drehbar macht, und einen Zwischen-Abschnitt, der durch den Körper-Rahmen (110) gelagert ist, so dass dieser drehbar um eine obere Achse ist, die sich in einer Vorder-Rück-Richtung von dem Körper-Rahmen (110) erstreckt, beinhaltet und
ein unteres Quer-Element (142), das einen rechten End-Abschnitt, der einen unteren Teil von dem Rechts-Seiten-Stab (144) lagert, in einer Weise, die den unteren Teil desselben drehbar macht, einen linken End-Abschnitt, der einen unteren Teil von dem Links-Seiten-Stab (144) lagert, in einer Weise, die den unteren Teil desselben drehbar macht, und einen Zwischen-Abschnitt, der durch den Körper-Rahmen (110) gelagert ist, so dass dieser drehbar um eine untere Achse ist, die parallel zu der oberen Achse ist, beinhaltet
ein Hinter-Rad (134); und
eine Leistungs-Einheit (170), die eine Antriebs-Kraft des Hinter-Rads (134) erzeugt,
**dadurch gekennzeichnet, dass**
die Leistungs-Einheit (170) durch den Körper-Rahmen (110) gelagert ist und durch Luft gekühlt ist, die durch einen Bereich unterhalb eines Unter-Endes des unteren Quer-Elements (142) von dem Lenker-Mechanismus (140) in der Oben-Unten-Richtung von dem Körper-Rahmen (110), links von dem rechten Vorder-Rad (131R) in der Links-Rechts-Richtung von dem Körper-Rahmen (110) und rechts von dem linken Vorder-Rad (131L) in der Links-Rechts-Richtung von dem Körper-Rahmen (110) in einer Vorder-Ansicht und hinter Vorder-Enden von dem rechten Vorder-Rad (131R) und dem linken Vorder-Rad (131L) in der Vorder-Rück-Richtung von dem Körper-Rahmen (110) in einer Seiten-Ansicht, mit dem Körper-Rahmen (110) in einem aufrechten Zustand, hindurchgetreten ist, wobei
ein Wärme-Tauscher (220L, 220R, 320, 420) vorgesehen ist, der Wärme abführt; und
eine Leitung (222L, 222R, 322L, 322R, 422L, 422R), die ein Fluid, das durch den Wärme-Tauscher (220L, 220R, 320, 420) gekühlt ist, zu der Leistungs-Einheit (170) überträgt, wobei
die Leistungs-Einheit (170) hinter einem Hinter-Ende von dem unteren Quer-Element (142) von dem Lenker-Mechanismus (140) in der Vorder-Rück-Richtung von dem Körper-Rahmen (110) in einer Draufsicht, mit dem Körper-Rahmen (110) in dem aufrechten Zustand, positioniert ist, und
zumindest ein Teil von dem Wärme-Tauscher (220L, 220R, 320, 420) ist hinter dem Hinter-Ende von dem unteren Quer-Element (142) von dem Lenker-Mechanismus (140) in der Vorder-Rück-Richtung von dem Körper-Rahmen (110) in einer Draufsicht, mit dem Körper-Rahmen (110) in dem aufrechten Zustand, positioniert, der Wärme-Tauscher (220L, 220R, 320, 420) ist vor der Leistungs-Einheit (170) in der Vorder-Rück-Richtung von dem Körper-Rahmen (110) positioniert.

2. Das Fahrzeug gemäß Anspruch 1, **dadurch gekennzeichnet, dass** zumindest ein Teil von dem Wärme-Tauscher (220L, 220R, 320, 420) unterhalb des Unter-Endes des unteren Quer-Elements (142) von dem Lenker-Mechanismus (140) in der Oben-Unten-Richtung von dem Körper-Rahmen (110) und zwischen dem rechten Vorder-Rad (131R) und dem linken Vorder-Rad (131L) in einer Vorder-Ansicht, mit dem Körper-Rahmen (110) in dem aufrechten Zustand, positioniert ist, und
der Wärme-Tauscher (220L, 220R, 320, 420) ist positioniert, so dass ein Bereich einer Vorder-Fläche von dem Wärme-Tauscher (220L, 220R, 320, 420), wenn betrachtet in der Vorder-Rück-Richtung von dem Körper-Rahmen (110), größer ist als ein Bereich von der Vorder-Fläche, wenn betrachtet in der Links-Rechts-Richtung von dem Körper-Rahmen (110), und größer als ein Bereich von der Vorder-Fläche, wenn betrachtet in der Oben-Unten-Richtung von dem Körper-Rahmen (110), und der Wärme-Tauscher (220L, 220R, 320, 420) führt Wärme ab, indem gestattet ist, dass die Luft durch den Wärme-Tauscher (220L, 220R, 320, 420) von der Vorder-Fläche zu einer Rück-Fläche von dem Wärme-Tauscher (220L, 220R, 320, 420) hindurchtritt.

3. Das Fahrzeug gemäß Anspruch 1, **gekennzeichnet durch**
einen Luft-Einlass-Anschluss (242) von einem Durchgang, der die Luft zu dem Wärme-Tauscher (220L, 220R, 320, 420) führt, wobei
zumindest ein Teil von dem Luft-Einlass-Anschluss (242) in einem Bereich hinter dem Hinter-Ende von dem unteren Quer-Element (142) von dem Lenker-Mechanismus (140) in der Vorder-Rück-Richtung von dem Körper-Rahmen (110) in einer Draufsicht, mit dem Körper-Rahmen (110) in dem aufrechten Zustand, und unterhalb des Unter-Endes von dem unteren Quer-Element (142) von dem Lenker-Mechanismus (140) in der Oben-Unten-Richtung von dem Körper-Rahmen (110), links von dem rechten Vorder-Rad (131R) in der Links-Rechts-Richtung von dem Körper-Rahmen (110) und rechts von dem linken Vorder-Rad (131L) in der Links-Rechts-Richtung von dem Körper-Rahmen (110) in einer Vorder-Ansicht, mit dem Körper-Rahmen (110) in dem aufrechten Zustand, positioniert ist, und
in der Vorder-Rück-Richtung von dem Körper-Rahmen (110) ist der Wärme-Tauscher (220L, 220R, 320, 420) hinter dem Luft-Einlass-Anschluss (242) in der Vorder-Rück-Richtung von dem Körper-Rahmen (110) positioniert.

4. Das Fahrzeug gemäß zu irgendeinem der Ansprüche 1 bis 3, **gekennzeichnet durch** eine Vorder-Abdeckung (201a), die eine Front von zumindest einem Teil von dem Lenker-Mechanismus (140) in der Vorder-Rück-Richtung von dem Körper-Rahmen (110) in einer Vorder-Ansicht, mit dem Körper-Rahmen (110) in dem aufrechten Zustand, abdeckt, wobei zumindest ein Teil von einer unteren Kante von der Vorder-Abdeckung (201a), die vor dem Lenker-Mechanismus (140) in der Vorder-Rück-Richtung von dem Körper-Rahmen (110) positioniert ist, oberhalb eines Unter-Endes von dem Lenker-Mechanismus (140) in der Oben-Unten-Richtung von dem Körper-Rahmen (110) positioniert ist, wobei
zumindest ein Teil von dem Wärme-Tauscher (220L, 220R, 320, 420) unterhalb der unteren Kante von der Vorder-Abdeckung (201a) in der Oben-Unten-Richtung von dem Körper-Rahmen (110) in der Vorder-Ansicht, mit dem Körper-Rahmen (110) in dem aufrechten Zustand, positioniert ist.

5. Das Fahrzeug gemäß zu irgendeinem der Ansprüche 1 bis 4, **dadurch gekennzeichnet, dass** zumindest ein Teil von dem Wärme-Tauscher (220L, 220R, 320, 420) unter Ober-Enden von dem rechten Vorder-Rad (131R) und dem linken Vorder-Rad (131L) in der Oben-Unten-Richtung von dem Körper-Rahmen (110) in der Vorder-Ansicht, mit dem Körper-Rahmen (110) in dem aufrechten Zustand, positioniert ist.

6. Das Fahrzeug gemäß zu irgendeinem der Ansprüche 1 bis 5, **dadurch gekennzeichnet, dass** zumindest ein Teil von dem Wärme-Tauscher (220L, 220R) oberhalb der Ober-Enden von dem rechten Vorder-Rad (131R) und dem linken Vorder-Rad (131L) in der Oben-Unten-Richtung von dem Körper-Rahmen (110) in einer Vorder-Ansicht, mit dem Körper-Rahmen (110) in dem aufrechten Zustand, positioniert ist.

7. Das Fahrzeug gemäß zu irgendeinem der Ansprüche 1 bis 6, **dadurch gekennzeichnet, dass** der Körper-Rahmen (110) einen geneigten Abschnitt, der hinter dem Lenker-Mechanismus (140) in der Vorder-Rück-Richtung von dem Körper-Rahmen (110) und vor einer Sitz-Fläche (181), auf der ein Fahrer sitzt, in der Vorder-Rück-Richtung von dem Körper-Rahmen (110), mit dem Körper-Rahmen (110) in dem aufrechten Zustand, beinhaltet, der geneigte Abschnitt ist geneigt, so dass ein hinterer Teil von dem geneigten Abschnitt unter einem vorderen Teil desselben in der Oben-Unten-Richtung von dem Körper-Rahmen (110) positioniert ist, und
der Wärme-Tauscher (220L, 220R, 320, 420) ist vor dem geneigten Abschnitt von dem Körper-Rahmen (110) in der Vorder-Rück-Richtung von dem Körper-Rahmen (110) positioniert.

8. Das Fahrzeug gemäß zu irgendeinem der Ansprüche 1 bis 7, **dadurch gekennzeichnet, dass** der Wärme-Tauscher (220L, 220R, 320, 420) ein Radiator, ein Ölkühler, oder ein Zwischen-Kühler ist.

9. Das Fahrzeug gemäß Anspruch 1, **dadurch gekennzeichnet, dass** die Leistungs-Einheit (170) einen Motor beinhaltet, und
der Motor ist positioniert, so dass dieser Luft empfängt, die durch einen Bereich unterhalb des Unter-Endes des unteren Quer-Elements (142) von dem Lenker-Mechanismus (140) in der Oben-Unten-Richtung von dem Körper-Rahmen (110), links von dem rechten Vorder-Rad (131R) in der Links-Rechts-Richtung von dem Körper-Rahmen (110) und rechts von dem linken Vorder-Rad (131L) in der Links-Rechts-Richtung von dem Körper-Rahmen (110) in einer Vorder-Ansicht, und hinter den Vorder-Enden von dem rechten Vorder-Rad (131R) und dem linken Vorder-Rad (131L) in der Vorder-Rück-Richtung von dem Körper-Rahmen (110) in einer Seiten-Ansicht, mit dem Körper-Rahmen (110) in dem aufrechten Zustand, hindurchtritt.

10. Das Fahrzeug gemäß zu Anspruch 9, **dadurch gekennzeichnet, dass** die Leistungs-Einheit (170) unterhalb des Unter-Endes von dem unteren Quer-Element (142) von dem Lenker-Mechanismus (140) in der Oben-Unten-Richtung von dem Körper-Rahmen (110), links von dem rechten Vorder-Rad (131R) in der Links-Rechts-Richtung von dem Körper-Rahmen (110) und rechts von dem linken Vorder-Rad (131L) in der Links-Rechs-Richtung von dem Körper-Rahmen (110) in einer Vorder-Ansicht, mit dem Körper-Rahmen (110) in dem aufrechten Zustand, positioniert ist, und
die Leistungs-Einheit (170) ist hinter einem Hinter-Ende von dem unteren Quer-Element (142) von dem Lenker-Mechanismus (140) in der Vorder-Rück-Richtung von dem Körper-Rahmen (110) und vor einem Vorder-Ende von dem Hinter-Rad (134) in der Vorder-Rück-Richtung von dem Körper-Rahmen (110) in einer Seiten-Ansicht, mit dem Körper-Rahmen (110) in dem aufrechten Zustand, positioniert.

## Revendications

1. Véhicule comprenant :
un cadre de carrosserie (110) qui s'incline dans une direction gauche-droite du véhicule pendant des virages à gauche et à droite ;
une roue avant droite (131R) et une roue avant gauche (131L) disposées côte à côte dans une direction gauche-droite du cadre de carrosserie (110) ;
une unité de support de roue avant droite (150R) comprenant une partie supérieure et une partie inférieure qui supporte la roue avant droite (131R) ;
une unité de support de roue avant gauche (150L) comprenant une partie supérieure et une partie inférieure qui supporte la roue avant gauche (131L) ;
un mécanisme de liaison (140) comprenant
une tige côté droit (144) qui supporte la partie supérieure de l'unité de support de roue avant droite (150R) d'une manière qui amène sa partie supérieure à pouvoir tourner autour d'un axe droit s'étendant dans une direction haut-bas du cadre de carrosserie (110)
une tige côté gauche (144) qui supporte la partie supérieure de l'unité de support de roue avant gauche (150L) d'une manière qui amène sa partie supérieure à pouvoir tourner autour d'un axe gauche qui est parallèle à l'axe droit,
une traverse supérieure (141) comprenant une partie d'extrémité droite qui supporte une partie supérieure de la tige côté droit (144) d'une manière qui amène sa partie supérieure à pouvoir tourner, une partie d'extrémité gauche qui supporte une partie supérieure de la tige côté gauche (144) d'une manière qui amène sa partie supérieure à pouvoir tourner, et une partie intermédiaire qui est supportée par le cadre de carrosserie (110) pour pouvoir être tournée autour d'un axe supérieur s'étendant dans une direction avant-arrière du cadre de carrosserie (110), et
une traverse inférieure (142) comprenant une partie d'extrémité droite qui supporte une partie inférieure de la tige côté droit (144) d'une manière qui amène sa partie inférieure à pouvoir tourner, une partie d'extrémité gauche qui supporte une partie inférieure de la tige côté droit (144) d'une manière qui amène sa partie inférieure à pouvoir tourner, et une partie intermédiaire qui est supportée par le cadre de carrosserie (110) pour pouvoir être tournée autour d'un axe inférieur qui est parallèle à l'axe supérieur,
une roue arrière (134) ; et
un unité motrice (170) générant une force d'entraînement de la roue arrière (134),
**caractérisé en ce que**
l'unité motrice (170) est supportée par le cadre de carrosserie (110) et est refroidie par de l'air qui est passé à travers une plage située au-dessous d'une extrémité inférieure de la traverse inférieure (142) du mécanisme de liaison (140) dans la direction haut-bas du cadre de carrosserie (110), sur la gauche de la roue avant droite (131R) dans la direction gauche-droite du cadre de carrosserie (110), et sur la droite de la roue avant gauche (131L) dans la direction gauche-droite du cadre de carrosserie (110) sur une vue de face et derrière des extrémités avant de la roue avant droite (131R) et de la roue avant gauche (131L) dans la direction avant-arrière du cadre de carrosserie (110) sur une vue de côté, avec le cadre de carrosserie (110) dans un état vertical, dans lequel
un échangeur de chaleur (220L, 220R, 320, 420) est prévu qui libère de la chaleur ; et
un tuyau (222L, 222R, 322L, 322R, 422L, 422R) transmet un fluide refroidi par l'échangeur de chaleur (220L, 220R, 320, 420) à l'unité motrice (170), dans lequel l'unité motrice (170) est disposée derrière une extrémité arrière de la traverse inférieure (142) du mécanisme de liaison (140) dans la direction avant-arrière du cadre de carrosserie (110) sur une vue de dessus avec le cadre de carrosserie (110) dans l'état vertical, et
au moins une partie de l'échangeur de chaleur (220L, 220R, 320, 420) est disposée derrière l'extrémité arrière de la traverse inférieure (142) du mécanisme de liaison (140) dans la direction avant-arrière du cadre de carrosserie (110) sur une vue de dessus avec le cadre de carrosserie (110) dans l'état vertical, l'échangeur de chaleur (220L, 220R, 320, 420) est disposé en avant de l'unité motrice (170) dans la direction avant-arrière du cadre de carrosserie (110).

2. Véhicule selon la revendication 1, **caractérisé en ce qu'**au moins une partie de l'échangeur de chaleur (220L, 220R, 320, 420) est disposée au-dessous de l'extrémité inférieure de la traverse inférieure (142) du mécanisme de liaison (140) dans la direction haut-bas du cadre de carrosserie (110) et entre la roue avant droite (131R) et la roue avant gauche (131L) sur une vue de face avec le cadre de carrosserie (110) dans l'état vertical, et
l'échangeur de chaleur (220L, 220R, 320, 420) est disposé de sorte qu'une aire d'une surface avant de l'échangeur de chaleur (220L, 220R, 320, 420) comme observé dans la direction avant-arrière du cadre de carrosserie (110) est supérieure à une aire de la surface avant comme observé dans la direction gauche-droite du cadre de carrosserie (110) et supérieure à une aire de la surface avant comme observé dans la direction haut-bas du cadre de carrosserie (110), et l'échangeur de chaleur (220L, 220R, 320, 420) dégage de la chaleur en permettant à l'air de traverser l'échangeur de chaleur (220L, 220R, 320, 420) depuis la surface avant vers une surface arrière de l'échangeur de chaleur (220L, 220R, 320, 420).

3. Véhicule selon la revendication 1, **caractérisé par**
un orifice d'admission d'air (242) d'un passage qui guide l'air vers l'échangeur de chaleur (220L, 220R, 320, 420), dans lequel
au moins une partie de l'orifice d'admission d'air (242) est située dans une plage derrière l'extrémité arrière de la traverse inférieure (142) du mécanisme de liaison (140) dans la direction avant-arrière du cadre de carrosserie (110) sur vue de dessus avec le cadre de carrosserie (110) dans l'état vertical et au-dessous de l'extrémité inférieure de la traverse inférieure (142) du mécanisme de liaison (140) dans la direction haut-bas du cadre de carrosserie (110), sur la gauche de la roue avant droite (131R) dans la direction gauche-droite du cadre de carrosserie (110), et sur la droite de la roue avant gauche (131L) dans la direction gauche-droite du cadre de carrosserie (110) sur une vue de face avec le cadre de carrosserie (110) dans l'état vertical, et
dans la direction avant-arrière du cadre de carrosserie (110), l'échangeur de chaleur (220L, 220R, 320, 420) est disposé derrière l'orifice d'admission d'air (242) dans la direction avant-arrière du cadre de carrosserie (110).

4. Véhicule selon l'une quelconque des revendications 1 à 3, **caractérisé par** un capot avant (201a) recouvrant l'avant d'au moins une partie du mécanisme de liaison (140) dans la direction avant-arrière du cadre de carrosserie (110) sur une vue de face avec le cadre de carrosserie (110) dans l'état vertical, dans lequel au moins une partie d'un bord inférieur du capot avant (201a) qui est positionnée en avant du mécanisme de liaison (140) dans la direction avant-arrière du cadre de carrosserie (110) est positionnée au-dessus d'une extrémité inférieure du mécanisme de liaison (140) dans la direction haut-bas du cadre de carrosserie (110), dans lequel au moins une partie de l'échangeur de chaleur (220L, 220R, 320, 420) est disposée sous le bord inférieur du capot avant (201a) dans la direction haut-bas du cadre de carrosserie (110) sur une vue de face avec le cadre de carrosserie (110) dans l'état vertical.

5. Véhicule selon l'une quelconque des revendications 1 à 4, **caractérisé en ce qu'**au moins une partie de l'échangeur de chaleur (220L, 220R, 320, 420) est disposée sous des extrémités supérieures de la roue avant droite (131R) et de la roue avant gauche (131L) dans la direction haut-bas du cadre de carrosserie (110) sur une vue de face avec le cadre de carrosserie (110) dans l'état vertical.

6. Véhicule selon l'une quelconque des revendications 1 à 5, **caractérisé en ce qu'**au moins une partie de l'échangeur de chaleur (220L, 220R) est disposée au-dessus des extrémités supérieures de la roue avant droite (131R) et de la roue avant gauche (131L) dans la direction haut-bas du cadre de carrosserie (110) sur une vue de face avec le cadre de carrosserie (110) dans l'état vertical.

7. Véhicule selon l'une quelconque des revendications 1 à 6, **caractérisé en ce que** le cadre de carrosserie (110) comprend une partie d'inclinaison placée derrière le mécanisme de liaison (140) dans la direction avant-arrière du cadre de carrosserie (110) et en avant d'un surface d'assise (181) sur laquelle un motocycliste est assis dans la direction avant-arrière du cadre de carrosserie (110) avec le cadre de carrosserie (110) dans l'état vertical, la partie d'inclinaison étant inclinée de sorte qu'une partie arrière de la partie d'inclinaison est positionnée au-dessous d'une partie avant de celle-ci dans la direction haut -bas du cadre de carrosserie (110), et l'échangeur de chaleur (220L, 220R, 320, 420) est disposé en avant de la partie d'inclinaison du cadre de carrosserie (110) dans la direction avant-arrière du cadre de carrosserie (110).

8. Véhicule selon l'une quelconque des revendications 1 à 7, **caractérisé en ce que** l'échangeur de chaleur (220L, 220R, 320, 420) est un radiateur, un refroidisseur d'huile, ou un refroidisseur intermédiaire.

9. Véhicule selon la revendication 1, **caractérisé en ce que** l'unité motrice (170) comprend un moteur, et
le moteur est disposé de manière à recevoir de l'air passant à travers une plage située au-dessous de l'extrémité inférieure de la traverse inférieure (142) du mécanisme de liaison (140) dans la direction haut-bas du cadre de carrosserie (110), sur la gauche de la roue avant droite (131R) dans la direction gauche-droite du cadre de carrosserie (110), et sur la droite de la roue avant gauche (131L) dans la direction gauche-droite du cadre de carrosserie (110) sur une vue de face et derrière les extrémités avant de la roue avant droite (131R) et de la roue avant gauche (131L) dans la direction avant-arrière du cadre de carrosserie (110) sur une vue de côté, avec le cadre de carrosserie (110) dans l'état vertical.

10. Véhicule selon la revendication 9, **caractérisé en ce que** l'unité motrice (170) est disposée au-dessous de l'extrémité inférieure de la traverse inférieure (142) du mécanisme de liaison (140) dans la direction haut-bas du cadre de carrosserie (110), sur la gauche de la roue avant droite (131R) dans la direction gauche-droite du cadre de carrosserie (110), et sur la droite de la roue avant gauche (131L) dans la direction gauche-droite du cadre de carrosserie (110) sur une vue de face avec le cadre de carrosserie (110) dans l'état vertical, et
l'unité motrice (170) est disposée derrière l'extrémité arrière de la traverse inférieure (142) du mécanisme de liaison (140) dans la direction avant-arrière du cadre de carrosserie (110) et à l'avant d'une extrémité avant de la roue arrière (134) dans la direction avant-arrière du cadre de carrosserie (110) sur une vue de côté avec le cadre de carrosserie (110) dans l'état vertical.
